Europäisches Patentamt

European Patent Office

Office européen des brevets

(19)

(11) Publication number: **0 137 518**
**B1**

(12) **EUROPEAN PATENT SPECIFICATION**

(45) Date of publication of patent specification: **21.10.87**

(51) Int. Cl.⁴: **C 08 L 51/06**

(21) Application number: **84112332.6**

(22) Date of filing: **12.10.84**

(54) **Blends of polyolefin graft polymers and ASA polymers, SMA polymers and condensation polymers.**

(30) Priority: **12.10.83 US 541399**
**12.10.83 US 541398**
**12.10.83 US 541195**

(43) Date of publication of application:
**17.04.85 Bulletin 85/16**

(45) Publication of the grant of the patent:
**21.10.87 Bulletin 87/43**

(84) Designated Contracting States:
**DE FR GB IT NL**

(56) References cited:
**EP-A-0 046 650**
**FR-A-1 561 586**
**US-A-4 206 291**
**US-A-4 454 300**

The file contains technical information
submitted after the application was filed and
not included in this specification

(73) Proprietor: **OCCIDENTAL CHEMICAL
CORPORATION**
**P.O. Box 189**
**Niagara Falls New York 14302 (US)**

(72) Inventor: **Walker, Leigh E.**
**921 Mohawk Street**
**Lewiston, New York N.Y. 14092 (US)**
Inventor: **Ranade, Gautam R.**
**Bldg. A-2, 4280 Chestnut Ridge Road**
**Tonawanda New York 14150 (US)**

(74) Representative: **Weickmann, Heinrich, Dipl.-Ing.
et al**
**Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

Courier Press, Leamington Spa, England.

## 0 137 518

**Description**

BACKGROUND OF THE INVENTION

The present invention relates to thermoplastic polymer blends capable of being molded into plastic articles with improved properties. The polyblends of the present invention contain a graft copolymer of a polymerizable polyolefin component. According to the invention, the polymerizable monomer is a vinyl halide, such as vinyl chloride and up to 50 weight percent of another copolymerizable monomer. They will be referred to as "vinyl halide-graft polyolefin polymers". The present blends also contain a polymer composition hereinafter referred to respectively as "ASA polymers", "SMA polymers" and "Condensation Polymers", or collectively as the "Blend Polymer".

Polyvinyl halide especially polyvinyl chloride, polymer are widely used thermoplastic materials having many favorable properties. Such conventional non-graft vinyl halide polymers do not have heat distortion temperatures which are sufficiently high to adapt such polymers to much more wide use. Moreover, such polymers, especially rigid polyvinyl halide polymers, do not have a high impact resistance at ambient or sub-ambient temperatures. Thus, at ambient temperature, i.e., at about 20°C., corresponding to about 68°F., the notched Izod impact resistance of vinyl halide homo- and copolymers is only of the order of about 2.2 to less than about 5.44 cmkg/cm. At sub-ambient temperatures, e.g., down to 29°C. or lower, the notched Izod impact resistance of these polymers becomes vanishingly small or negligible.

It has been previously proposed to add minor amounts of an appropriate polymer additive, or additives, to improve ambient impact resistance of conventional polyvinyl polymer compositions. Usually, such additives are useful in ranges from about 3 to about 15 percent by weight of the polyvinyl halide polymer. Among the materials which have been found acceptable as polyvinyl halide impact modifiers are ABS polymers. Such impact modifiers moderately enhance the ambient temperature impact resistance of conventional vinyl halide polymers, i.e., generally raise the ambient temperature notched Izod impact resistance of the polymer to about 10.88 to 54.4 cmkg/cm. However, these impact modifiers are relatively ineffective in imparting a satisfactory sub-ambient temperature impact resistance to the polymer, i.e., the 29°C. notched Izod impact resistance of the polymer containing the impact modifier is well below 5.44 cmkg/cm and usually is about 2.2 to 2.7 cmkg/cm.

The FR—A—1 561 586 describes a process for the preparation of plastic articles, in which a resinous polymer and a caoutchouc polymer, on which monomers of the resinous component are grafted, can be prepared simultaneously. By using this process plastic articles with slightly improved properties can be obtained.

Recently, vinyl halide-polyolefin graft copolymers have been developed to be a commercial reality. Such copolymers are produced by polymerization of vinyl halide (or a monomer mixture of vinyl halide and copolymerizable ethylenically unsaturated comonomers) in the presence of a polyolefin elastomer. Such reaction yields a polymer product which contains vinyl halide polymer chains bound, i.e., grafted at various sites along the chain of the trunk olefin polymer, as well as ungrafted vinyl halide polymer and ungrafted polyolefin. The graft polymer product, especially the graft polymer product prepared by a liquid phase bulk polymerization reaction, has improved impact resistance at both ambient temperature and sub-ambient temperatures compared to the aforementioned conventional, i.e., ungrafted, vinyl halide polymers even when the latter are blended with a conventional polyvinyl halide impact modifying polymer additive. The bulk polymerization-prepared graft polymer product is even distinguished from the corresponding graft polymer prepared by a non-bulk polymerization technique, e.g., suspension polymerization, by an enhanced impact resistance at both low and ambient temperature and by breakage by the desirable ductile breakage mode rather than by an undesirable brittle breakage mode.

Although such graft polymer possesses a sub-ambient low temperature impact resistance substantially greater than that of conventional impact modifier-containing vinyl halide polymer compositions, the improvement, especially at low temperature, in impact resistance is not sufficient enough to make such copolymers generally useful in a wide variety of applications at low temperature.

It is desired to improve the fire retardance of high performance condensation polymers. It is desirable to add a polymeric fire retarding agent that is compatible to give fire resistance with minimum loss of the good properties of the high performance materials.

It has now been found that blends containing (1) a polyolefin graft polymer, prepared in a new way, especially vinyl halide polyolefin graft polymers, and more especially those produced in a mass polymerization reaction, and (2) Blend Polymers have particularly useful properties.

The european patent application 0 046 650, for example, relates to a moldable thermoplastic polymer composition, which is comprised of a blend of a polyvinylhalide-polyolefin graft polymer and an ABS-polymer.

The modular miscibility exhibited by the matrix phases of these polymeric components of the invention offers several advantages. The miscibility provides excellent mechanical compatibility. Superior weld line strengths and improved surface properties can be obtained when a miscible polymer blend is used. A problem of possible deterioration of the properties due to phase separation during or after processing may exist for a immiscible blend. This is likely in case of the injection molding process which typically uses very high shear rates. This problem is unlikely in the case of a miscible polymer system. Also, an efficient heat distortion enhancement per unit weight of the added polymer can be usually obtained

2

compared to the immiscible systems. Preferential segregation of additives associated with components of a polymer blend can occur. This problem is generally avoided with miscible blends.

SUMMARY OF THE INVENTION

The present invention relates to a thermoplastic polymer composition which is comprised of a blend of a polyolefin graft polymer and an ASA polymer, an SMA polymer or a Condensation Polymer, collectively called a "Blend Polymer". The polyolefin graft polymer is a polymer of an ethylenically unsaturated polymerizable monomer and a polymer of an olefin of 2 to 8 carbon atoms, prepared in a process wherein the olefin polymer is substantially insoluble in the monomer, but is capable of absorbing the monomer.

Another aspect of the invention relates to a thermoplastic polymer composition which is comprised of a blend of a vinyl halide polyolefin graft polymer and said Blend Polymer. The vinyl halide polyolefin graft polymer is a product of a solid polyolefin particle comprising a polymer of an olefin of 2 to 8 carbon atoms, preferably a polyolefin of an aliphatic hydrocarbon olefin of 2 to 8 carbon atoms with a vinyl halide monomer either alone or in combination with up to 50 percent by weight based on the total weight of monomer of an ethylenically unsaturated compound copolymerizable therewith. The olefin polymer is substantially insoluble in the monomer, but is capable of absorbing the monomer.

Both the polyolefin graft copolymer and the vinyl halide-polyolefin graft polymer are prepared by reacting polyolefins in a proportion of about 20 to about 80 weight percent based on the weight of the reactive monomer, although higher and lower proportions can be used. The preferred proportion is 30 to 50 weight percent of polyolefin based on weight of the monomer. The foregoing polyolefin graft polymers are advantageously prepared in a mass polymerization process, but can also be prepared in the presence of an inert diluent such as water.

By ASA polymer is meant a polymer of styrene and acrylonitrile that is modified by blending with or reaction with an acrylate polymer, a chlorinated polyethylene, or an olefin-diolefin modified polymer such as an ethylene propylene polyene modified polymer. Such ASA polymers are found to be highly miscible with the vinyl halide-polyolefin graft polymers.

By SMA polymer is meant a polymer of styrene and maleic anhydride, and such polymers that are modified by blending with or reaction with an olefin-diolefin modified polymer such as an ethylene propylene/polyene modified polymers as well as diolefin polymers such as polybutadiene. Such SMA polymers are found to exhibit molecular miscibility with the vinyl halide-polyolefin graft polymer.

By Condensation Polymer is meant polymers of reactive monomers that propagate with elimination of by-products, such as water, ammonia, methanol and phenol. Typical of such polymers are the various forms of polyesters, such as bisphenol iso- and terephthalate polyesters, polyalkylene terephthalates, such as polyamides, polycarbonates and the like.

The blends of this invention have beneficial properties when compared to prior art blends.

A further aspect of this invention involves blends of the foregoing polyolefin graft polymers, Blend Polymers and graft polymers and copolymers of the polymerizable monomers that can form part of the polyolefin graft polymers. A preferred aspect of this invention involves blends of vinyl halide polyolefin graft polymers, Blend Polymers and a polymer of a vinyl halide alone or copolymerized with a polymerizable monomer.

DETAILED DESCRIPTION OF THE INVENTION AND THE PREFERRED EMBODIMENTS THEREOF

Proportions of the Blend Polymer in a binary blend with the polyolefin graft polymer, can range typically from less than about 1 percent to more than about 99 weight percent of Blend Polymer (with the balance being the graft polymer component). It is preferred to provide blends which contain about 5 percent up to about 80 percent of the polyolefin graft polymer to achieve the desired enhanced properties. Preferred blends of this aspect of the invention contain about from about 5 percent to about 95 percent of the Blend Polymer component, said percentages being based on the weight of the blend of the graft polymer and the Blend Polymer.

With respect to the aspect of the invention involving not only the graft polymer components and the Blend Polymer component, but also an auxiliary polymer comprising a polymer or copolymer of an ethylenically unsaturated polymerizable monomer, the proportions of components are in the following ranges. The Blend Polymer component is generally present in a proportion of about 20 percent to about 80 percent of the total polymer components, with the remainder being the polyolefin graft copolymer and the auxiliary polymer component. The latter two components are generally present in the proportion of about 10 parts polyolefin graft polymer to 90 parts auxiliary polymer to about 90 parts polyolefin graft polymer to 10 parts auxiliary polymer. The range is preferably from about 20 parts polyolefin graft polymer to 80 parts auxiliary polymer to 40 parts auxiliary polymer to about 30 parts polyolefins raft polymer to 60 parts auxiliary polymer. All parts and percentages are by weight.

THE POLYOLEFIN GRAFT POLYMER COMPONENT

The component of the polymer blends of the invention is a graft polymer of an ethylenically unsaturated polymerizable monomer and a polymer of an olefin of 2 to 8 carbon atoms, wherein the olefin polymer is substantially insoluble in the monomer but is capable of absorbing the monomer.

3

Monomer Component

The novel graft polymers of the invention are prepared from one or more ethylenically unsaturated compounds that is polymerizable in the presence of a free-radical initiator. Suitable ethylenically unsaturated compounds which can be used are illustrated by the following compounds. Monoolefinic hydrocarbons, i.e., monomers containing only carbon and hydrogen, including such materials as ethylene, propylene, 3-methylbutene-1, 4-methylpentene-1, pentene-1, 3,3-dimethylbutene-1, 4,4-dimethylbutene-1, octene-1, decene-1, styrene and its nuclear alpha-alkyl or aryl substituted derivatives, e.g., o-, m- or p-methyl, ethyl, propyl or butyl styrene, alpha-methyl, ethyl, propyl or butyl styrene; phenyl styrene, and halogenated styrenes such as alpha-chlorostyrene; monoolefinically unsaturated esters including vinyl esters, e.g., vinyl acetate, vinyl propionate, vinyl butyrate, vinyl stearate, vinyl benzoate, vinyl-p-chloro-benzoates, alkyl methacrylates, e.g., methyl, ethyl, propyl, butyl, octyl and lauryl methacrylate; alkyl crotonates, e.g., octyl; alkyl acrylates, e.g., methyl, ethyl, propyl, butyl, 2-ethyl hexyl, stearyl, hydroxyether and tertiary butylamino acrylates, isopropenyl esters, e.g., isopropenyl acetate, isopropenyl propionate, isopropenyl butyrate and isopropenyl isobutyrate; isopropenyl halides, e.g., isopropenyl chloride; vinyl esters of halogenated acids, e.g., vinyl alpha-chloroacetate, vinyl alpha-chloropropionate and vinyl alpha-bromopropionate; allyl and methallyl compounds, e.g., allyl chloride, allyl alcohol, allyl cyanide, allyl chlorocarbonate, allyl nitrate, allyl formate and allyl acetate and the corresponding methallyl compounds; esters of alkenyl alcohols, e.g., beta-ethyl allyl alcohol and beta-propyl allyl alcohol; halo-alkyl acrylates, e.g. methyl alpha-chloroacrylate and ethyl alpha-chloroacrylate, methyl alpha-bromoacrylate, ethyl alpha-bromoacrylate, methyl alpha-fluoroacrylate, ethyl alpha-fluoroacrylate, methyl alpha-iodoacrylate, ethyl alpha-iodoacrylate; alkyl alpha-cyanoacrylates, e.g., methyl alpha-cyanoacrylate and ethyl alpha-cyanoacrylate, maleates, e.g., monomethyl maleate, monoethyl maleate, dimethyl maleate, diethyl maleate, and fumarates, e.g., monomethyl fumarate, monoethyl fumarate, dimethyl fumarate, diethyl fumarate, and diethyl glutaconate; monoolefinically unsaturated organic nitriles including, for example, fumaronitrile, acrylonitrile, methacrylonitrile, ethacrylonitrile, 1,1-dicyanopropene-1, 3-octenenitrile, crotonitrile and oleonitrile; monoolefinically unsaturated carboxylic acids including, for example, acrylic acid, methacrylic acid, crotonic acid, 3-butenoic acid, cinnamic acid, maleic, famaric and itaconic acids, maleic anhydride and the like. Amides of these acids such as acrylamide, are also useful. Vinyl alkyl ethers and vinyl ethers, e.g., vinyl methyl ether, vinyl ethyl ether, vinyl propyl ether, vinyl n-butyl ether, vinyl isobutyl ether, vinyl 2-ethylhexyl ether, vinyl-2-chloroethyl ether, vinyl propyl ether, vinyl n-butyl ether, vinyl isobutyl ether, vinyl 2-ethylhexyl ether, vinyl 2-chloroethyl ether, vinyl cetyl ether and the like; and vinyl sulfides, e.g. vinyl betachloroethyl sulfide, vinyl betaethoxyethyl sulfide and the like can also be included as can diolefinically unsaturated hydrocarbons containing two olefinic groups in conjugated relation and the halogen derivatives thereof, e.g., butadiene-1,3; 2-methyl-butadiene-1,3; 2,3-dimethyl-butadiene-1,3, 2-methyl-butadiene-1,3, 2,3-dimethyl-butadiene-1,3, 2-chloro-butadiene-1,3, 2,3-dichlorobutadiene-1,3; and 2-bromobutadiene-1,3 and the like. Mixtures of the foregoing compounds can also be employed.

Particularly useful monomer compositions include styrene, methyl, methacrylate, methyl acrylate, vinyl acetate, mixtures of styrene and acrylonitrile, and mixtures of styrene and various maleates.

In one aspect of the invention, the preferred monomer composition is comprised totally of a vinyl halide monomer. Suitable vinyl halide monomers useful in the invention are the alpha-halo-substituted ethylenically unsaturated compounds which are capable of entering into an addition polymerization reaction, for example vinyl monohalides such as vinyl fluoride, vinyl chloride, vinyl bromide, and vinyl iodide, as well as vinyl dihalides such as vinylidene fluoride, vinylidene chloride, vinylidene bromide, and vinylidene iodide and the like, although vinyl chloride is preferred.

While it is preferred that the monomer composition be comprised totally of vinyl halide monomer as described above, the present invention is also intended to include copolymers formed by the free-radical addition polymerization of a monomer composition containing a predominant amount, e.g., at least 50 percent of vinyl halide with the remainder being another ethylenically unsaturated monomer composition copolymerizable therewith. Preferably, the other ethylenically unsaturated monomer is used in amounts of 20 percent or less by weight and more preferably in amounts of 10 percent or less by weight of the total monomer used in preparing the polymer.

Specific monomer compositions for forming copolymers can be illustrated by vinyl chloride and/or vinylidene chloride and vinyl acetate, vinyl chloride and/or vinylidene chloride and maleic or fumaric acid esters, vinyl chloride and/or vinylidene chloride and acrylate or methacrylate ester, vinyl chloride and/or vinylidene chloride and vinyl alkyl ether. These are given as illustrative of the numerous combinations of monomers possible for the formation of copolymers. The present invention includes all such combinations:

Polyolefin Component

The polyolefin component of the invention is characterized by being substantially insoluble in the reactive monomer component, and it remains insoluble during the polymerization reaction. The polyolefin is also capable of absorbing the reactive monomer component. When the proportion of polyolefin in the reaction mixture is at least about 20 weight percent of the reactive components, essentially all of the monomer component is absorbed into the particles of polyolefin component where the reaction occurs.

4

Generally, the polyolefin is capable of absorbing monomer to the extent of at least about 10 weight percent of the weight of polyolefin, usually at least about 25 weight percent and more usually at least about 100 weight percent of the weight of polyolefin. Generally, the polyolefin can absorb monomer up to 10 times the weight of polyolefin, more usually up to about 400 weight percent and still more usually up to 300 weight percent of the weight of polyolefin. The polyolefin may swell in the presence of the monomer. But the polyolefin remains as a free flowing particle that does not agglomerate or fuse.

The preferred polyolefins are prepared from unsubstituted, aliphatic hydrocarbon monoolefins, including straight chain and branched chain compounds such as ethylene propylene and butylene-1, isobutene, pentene, hexene, heptane, octene, 2-methylpropene-1, 3-methylbutene-1, 4-methylpentene-1, 4-methylhexene-1, and 5-methylhexene-1.

The polyolefin also preferably contains an unsubstituted, aliphatic hydrocarbon polyene, such as diene or triene, as a monomer unit. Generally polyenes of from 5 to 18 carbon atoms are employed.

Suitable comonomers for preparing the polyolefins are those utilized to prepare homopolymers as listed above such as propene or butene-1 with ethene or isobutylene with isoprene and the like. Suitable termonomers are those utilized to prepare homopolymers and copolymers as disclosed above such as propene, ethene and the like containing up to 15 percent, preferably up to about 10 percent by weight of polyene, for example, a diene such as dicyclopentadiene, 1,3-butadiene, 1,5-cyclooctadiene, 2-ethylidene-norbornene-5, 1,4-hexadiene, 1,4-heptadiene, and other conjugated and especially nonconjugated dienes with linear or cyclic chains.

Trienes such as isopropylidene cyclopentadiene and the Diels-Alder mono- and di-adducts thereof with cyclopentadiene can be used in place of the diene.

Unsubstituted, aliphatic diolefins can also be used for preparing useful polyolefins such as butadiene, isoprene, octadiene, and the like. Especially useful are the various forms of polybutadiene, such as made in emulsion, suspension or solution processes, and random, block, and star block polymers such as styrene.

Various other polyolefins that contain other than hydrogen and carbon can also be employed as long as they meet the criteria of being insoluble in the reactive monomer and capable of absorbing that monomer. Such polyolefins are generally polymers of substituted, aliphatic hydrocarbon olefins of 2 to 8 carbon atoms, and are more particularly polymers of an unsubstituted, aliphatic hydrocarbon olefin of 2 to 8 carbon atoms and a substituted, aliphatic hydrocarbon olefin of 2 to 8 carbon atoms. Suitable substituted hydrocarbon olefins include vinyl acetate, vinyl benzoate, and other vinyl esters with organic acids and haloacids, isopropenyl acetate and other esters, methyl methacrylate and other alkyl methacrylates, methyl acrylate, ethyl acrylate and other alkyl acrylates, and olefins. Included in such additional polyolefins are olefin-vinyl acetate copolymers, such as ethylene-vinyl acetate copolymers; olefinacrylate copolymers, such as ethylene-acrylate copolymers; polychlorobutadiene, and the like.

Suitable polyolefin components include the above described homopolymers, copolymers or terpolymers, but can also include blends of two or more polyolefins that may not meet the criteria in themselves, but the blended composition is insoluble in the reactive monomer but capable of absorbing the reactive monomer. Thus, certain ethylene propylene diene modified polymers (EPDM) are soluble in vinyl chloride monomer, and hence are not suitable when used alone in the process of the invention. High density polyethylene (HDPE) is insoluble in vinyl chloride monomer, but does not absorb that monomer, and hence is not suitable when used alone in the process of the invention. However, it is found that mixtures of ethylene propylene diene modified polymers and high density polyethylene when melt blended are highly desirable in the process of the invention. The higher the ethylene content of the EPDM, the lower the amount of HDPE required. Particularly suitable are HDPE's having a melt index of 0.1 to 50, blended with a polyolefin, for example, EPDM at a ratio of from 1 to 20 to 20 to 1.

Low density polyethylene is found to be both insoluble in vinyl chloride monomer and capable of absorbing that monomer, and is useful in the process of the invention. The very low density polyethylene waxes, on the other hand, are soluble in vinyl chloride monomer and hence are not suitable when used alone in the process of the invention. Other useful blends of polyolefins include blends of polybutadiene and high density polyethylene. Very high molecular weight polymers, e.g. polybutadiene of weight average molecular weight of over 1,000,000, or ethylene propylene copolymer of weight average molecular weight over 300,000, function in this manner without blending in reactions where their lower homologs may need to be blended to meet the nonsolubility requirement. A given blend or polymer may perform with one monomer where the insolubility requirement is met, but not in another where it dissolves, or partially dissolves. The former would be considered to be within the scope of the invention whereas the latter would not.

The polyolefin used in the invention is in particulate form. The particles may be pellets, such as formed by extrusion through an orifice and cutting into pellets by a dicer. The particles can also be formed as pellets in a pellet forming device. The polyolefin is generally in the form of particles measuring in the range of about 1 to about 5 millimeters, preferably about 1 to about 3 millimeters. Other particle sizes can be used. The particles can be of various shapes, uniform such as beading cylinders, pill shaped, as well as in irregular shapes resulting from grinding.

Reaction Conditions

The polyolefin graft polymer component of the invention is preferably prepared in a mass

5

polymerization process wherein solid discrete particles or pellets of solid polyolefin are mixed with a monomer component in the liquid state and a free-radical initiator compound at ambient temperatures. All or part of the mixture of monomer and initiator compound is absorbed into the solid polyolefin particles.

It is preferred to put all the monomer into the reactor with the polyolefin at the beginning of the reaction. However, the monomer can be added incrementally during the reaction. As indicated hereinbefore, the monomer can be reacted with the polyolefin in steps to achieve the desired product. Generally only sufficient monomer is introduced at one time to the polyolefin to avoid the formation of powdered polymer, except, of course, in the aspect of the invention where co-manufacture of particles of graft polymer and powdered homopolymer or copolymer is desired. When operating in the stepwise embodiment, the amount of monomer added in the second and subsequent steps does not usually exceed the ratio of monomer to polyolefin established in the first step of the sequence.

The reaction mixture is heated to a temperature in the range of about 30 to about 90 degrees Celsius, preferably in the range of about 40 to about 75 degrees Celsius, more preferably in the rage of about 60 to about 70 degrees Celsius, and the reaction is allowed to proceed to the desired conversion of monomer, generally in the range of about 30 to 90 percent conversion, preferably about 50 to 80 percent conversion, and more preferably about 60 to 75 percent conversion. Thereafter, the unreacted monomer component is removed from the reaction mixture by suitable degassing techniques such as by direct degassing, by drawing a vacuum on the reaction product, by washing with water or a solvent or by steam distillation. The solid reaction product is withdrawn from the reaction vessel as the product of the process.

Initiators

Suitable initiator compounds for use in the process of the invention include organic or inorganic peroxides, persulfates, ozonides, hydroperoxides, peracids and percarbonates, azo compounds, diazonium salts, diazotates, peroxysulfonates, trialkyl borane-oxygen systems, and amine oxides. Suitable initiators are soluble in the organic phase, such as peroxides: benzoyl proxide, capryl peroxide, lauroyl peroxide, 2,4-dichlorobenzoyl peroxide, diacetyl peroxide, and acetyl cyclohexylsulfonyl peroxide; azo compounds; azobisisobutyronitrile, azobis(alphamethyl gammacarboxybutyronitrile), azobis(alphagamma-dimethylvaleronitrile), 2,2'-azobis(2,4-dimethylvaleronitrile); peroxydicarbonates: diiopropyl peroxydicarbonate disecbutyl peroxydicarbonate, and dicyclohexylperoxydicarbonate, azobiciobutyramidine hydrochloride, and peresters: t-butyl peroxypivalate and t-butyl peroxyneodecanoate. Peroxydicarbonates, peresters and peroxides are particularly useful in the present invention. The initiator is used in concentration ranging from about 0.01 to about one percent by weight, preferably about 0.1 to about 0.5 percent by weight, based on the total weight of the monomers. Other amounts can be used.

Diluents

Various diluents may be used in the process of the invention as long as they are not reactive with the products of the invention and do not dissolve the products of the invention, which would partially defeat many of the virtues of the process. The most common diluent is water, which may be used without any suspending or emulsifying agent. Essentially when water is used as the diluent, the particles of solid polyolefin float in the water phase and during the reaction process are dispersed through the water phase by suitable agitation.

Other diluents include organic compounds such as saturated hydrocarbons having from about 3 to about 15 carbon atoms per molecule. Preferably, the diluent is a straight or branched chain, or cyclic saturated hydrocarbon having from 3 to 15 carbon atoms, and more preferably, from 4 to 8 carbon atoms. Alcohols of 1 to 15 carbon atoms can also be employed.

Illustrative examples of suitable diluents which can be employed in the present process include n-propane, n-butane, isobutane, isopentane, neopentane, 2-methyl pentane, 3-methyl pentane, 2,2-trimethyl pentane, 2,2,3-trimethyl pentane, n-tridecane and n-pentadecane. Mixtures of these and other hydrocarbon alkanes, as well as cycloalkanes, such as cyclohexane and methyl cyclopropane, can be used also. Useful alcohols include ethyl, isopropyl, butyl, isobutyl, octyl, dodecyl alcohol, ethylene glycol, propylene glycol, 1,3-dihydroxypropane, and the like.

The diluents can enter the polyolefin particle as in the case of hydrocarbons, or may stay out as in the case of water, or may do both.

Chain Transfer Agents

Chain transfer agents can be used in the process of the invention to adjust the molecular weight of the polymer of the unsaturated monomer, such as PVC. The polyolefin component itself is found to serve as a chain transfer agent by changing the molecular weight of the PVC produced in the case of vinyl chloride monomer. Other transfer agents that can be used include aldehydes, mercaptans such as mercaptoethanol, dodecylmercaptan, chloroolefins such as perchloroethylene, trichloroethylene, halomethanes such as bromoform, olefins, substituted isopropyl compounds, thiotin compounds, such as alkyltin mercaptoacetate esters and the like.

THE ASA POLYMER COMPONENT

The ASA polymer is a polymer of styrene and acrylonirile (often referred to in the trade as a SAN

6

polymer) that is modified with an acrylate polymer or a chlorinated polyethylene or a terpolymer of ethylene, propylene and a non-conjugated diene. Generally the styrene and acrylonitrile components are reacted with the acrylate polymer or the chlorinated polyethylene.

One such suitable ASA polymer is disclosed in U.S. Patent 4,111,876. In accordance with the patent, a preferred ASA polymer is prepared by an improved process which comprises: introducing at least one primary polymerizable feed composition, selected from the group of monomers consisting of styrene, acrylonitrile, acrylate ester, and a mixture of two or more of such monomers, from at least one primary feed source to a polymerization zone, the primary polymerizable feed composition continually varying in compositional content of the polymerizable reactants therein during the continuous introductions; simultaneously adding to the primary feed source at least one different second polymerizable feed composition, selected from the group of monomers consisting of styrene, acrylonitrile, acrylate ester and a mixture of two or more of such monomers, from at least one secondary feed source so as to continually change the compositional content of the polymerizable reactants of the primary polymerizable feed composition in the primary feed source; and continuously polymerizing the primary polymerizable feed composition introduced to the polymerization zone until desired polymerization has been achieved. The primary polymerizable feed composition being different from the secondary polymerizable feed composition. The polymerization is preferably conducted under monomer starved conditions. The weight ratio of acrylonitrile to styrene is preferably about 1 to 3 in a clear or transparent ASA polymeric material.

Any of the known acrylate esters can be used. While the preferred acrylate ester is 2-ethylhexyl acrylate, other lower alkyl acrylates having 2 to 12, preferably 4 to 10, carbon atoms in the alkyl group, such as, ethyl acrylate, isopropyl acrylate, propyl acrylate, n-butyl acrylate, hexyl acrylate, dodecyl acrylate, 3-methyl-1-butyl acrylate, isobutyl acrylate and isodecyl acrylate, can be used.

Styrene and acrylonitrile provide a hard matrix component and the acrylonitrile, styrene and acrylate ester provide the rubber or elastomeric segment. The preferred ratio of acrylonitrile to styrene is in the range of 1 to 3. The hard matrix acrylonitrile-styrene (AS) to elastomer weight ratio in the ASA should be in the range of between 40 to 60 and 60 to 40.

A commercially available embodiment of this ASA polymer was found to have a composition of 56 percent styrene, 15.2 percent acrylonitrile and 28.8 percent acrylate polymer, all percentages by weight.

Another suitable ASA polymer is disclosed in U.S. Patent 4,151,226. This ASA polymer is prepared by graft copolymerizing in the presence of a water soluble polymer and a radical polymerization initiator in an aqueous medium, 90 to 60 part by weight of a monomer mixture comprising 30 to 100 percent by weight of an aromatic vinyl compound, such as styrene, and 0 to 70 percent by weight of an acrylonitrile component in which the proportion of acrylonitrile is 20 to 100 percent by weight with the remainder being methylmethacrylate. This monomer mixture is copolymerized in the presence of 10 to 40 parts by weight (in terms of solids content) of a rubbery copolymer latex obtained by copolymerizing in a aqueous emulsion a mixture comprising (1) 60 to 99.9 percent by weight of at least 1 alkyl acrylate such as butyl acrylate, having 1 to 13 carbon atoms in the alkyl group, (2) 0 to 20 percent by weight of at least one vinyl compound copolymerizable with (1), such as styrene, and (3) 0.1 to 20 percent by weight of at least one organic polyallyl compound copolymerizable with component (1), such as triallyl isocyanurate. In the polymerization process, the reaction system is subjected to a mechanical mixing treatment by means of, for example, an ordinary agitator, homogenizer or colloid mill and then conducting the graft copolymerization.

The preferred aromatic vinyl compound is styrene. However, various vinyl aromatic monomer can also be employed such as alkyl styrenes such as p-methyl styrene, ethylstyrene, isopropyl styrene, p-tertiary butyl styrene, and the like; halogen substituted styrenes such as chlorostyrene and dichlorostyrene and the like.

Suitable alkyl acrylates are those which contain an alkyl group having 1 to 13, preferably 4 or less, carbon atoms. Specific acrylates include 2-ethylhexyl acrylate, ethyl acrylate, isopropyl acrylate, propyl acrylate, n-butyl acetate, hexyl acrylate, dodecyl acrylate, 3-methyl-1-butyl acrylate, isobutyl acrylate and isodecyl acrylate.

The organic polyallyl compounds used in preparing the rubber copolymer act as a crosslinking agent for the acrylic ester, and provide grafting active sites in the graft copolymerization, whereby favorable results are obtained. Such effects result from the fact that the allyl group is very easily reacted with a radical, which enables the effective crosslinking reaction in polymerization into the rubbery copolymer. Further, the remaining allyl groups provide effective grafting active sites in the graft copolymerization, since a radical chain transfer to the residual allyl groups easily takes place. The organic polyallyl compounds used include triallyl cyanurate, trially isocyanurate, diallyl phthalate, diallyl isophthalate, diallyl terephthalate, triallyl trimellitate, diallyl trimellitate tetraallyl pyromellitate triallyl pyromellitate, diallyl pyromelitate, diallyl maleate, diallyl fumarate, diallyl adipate, etc., whereas those organic polyallyl compounds which are unable to copolymerize with an acrylic ester, such as triallylamine, diallylamine and diallyl sulfide are of course, excluded from the scope of this invention. The amount of the organic polyallyl compound used should be such that 0.1 to 20 percent, preferably 0.5 to 10 percent, by weight of the compound based on the total weight of the monomer mixture. When the amount is less than 0.1 percent by weight, the polyallyl compound cannot show a sufficient crosslinking effect, and when the amount is more than 20 percent by weight, it adversely affects the rubber elasticity. The organic polyallyl compounds may

7

be used alone or in combination of two or more.

In the polymerization into the rubbery copolymer (A), a part of the alkyl acrylate may be replaced by at least one vinyl compound copolymerizable with the acrylic ester such as, for example, styrene, acrylonitrile, or methyl methacrylate. In such a case, the proportion of the vinyl compound is 30 percent by weight or less, preferably 20 percent by weight or less based on the total weight of the monomer mixture.

This ASA polymer is produced in accordance with processes and additives such as initiators, emulsifiers, and the like, disclosed in the aforesaid U.S. patent 4,151,226.

A commercial embodiment of this ASA polymer comprises 58.4 percent of styrene monomer, 23.3 percent acrylonitrile and 18.3 percent acrylic polymer, all percentages being by weight.

Another suitable ASA polymer is disclosed in U.S. Patent 3,953,540. Such products comprise acrylonitrile, styrene and chlorinated polyethylene. Included are the graft type resins which are obtained by copolymerizing a chlorinated polyethylene with a mixture of acrylontrile and styrene, (b) the blend type resins which are obtained by mixing a chlorinated polyethylene with an acrylonitrile-styrene copolymer, and (c) the graft-blend resin which is obtained by mixing the foregoing graft type resin with an acrylonitrile-styrene copolymer. Also included are such resins in which methyl methacrylate is substituted for a part of the acrylonitrile, as well as those in which alpha-methylstyrene is substituted for a part of the styrene. Suitable chlorinated polyethylenes are those obtained by chlorinating a polyethylene of an average molecular weight of above 50,000 and preferably above 100,000, and in addition, those obtained by chlorinating ethylene copolymers such as ethylene-propylene or ethylene-butene-1, as well as polymers obtained by chlorosulfonating polyethylene.

In the foregoing polymers, the chlorinated polyethylene is present in an amount from about 25 to 35 percent by weight, and the degree of chlorination of the chlorinated polyethylene is about 30 to about 45 percent by weight. The ratio of acrylonitrile to styrene is preferably in the range of 1:99 to 50:50.

One commercially available ASA polymer of this type contains 40.8 percent styrene, 14.9 percent acrylonitrile and 44.3 percent chlorinated polyethylene, all percentages by weight. Another commercially available ASA polymer of this type contains 52.1 percent styrene, 13.1 percent acrylonitrile and 34.7 percent chlorinated polyethylene, all percentages by weight.

Another ASA polymer comprises a graft terpolymer of ethylene and propylene and a non-conjugated diene, which terpolymer is copolymerized with a mixture of styrene and acrylonitrile, and preferably mixed with a copolymer of acrylonitrile and styrene. Such ASA polymers are disclosed in U.S. Patents 3,489,821 and 4,166,081. The graft copolymer is made by polymerizing a resinforming monomer or a mixture of such monomers, in the presence of a rubbery copolymer resulting from the copolymerization of a monomer mixture comprising two or more alpha-monoolefins, with or without a minor proportion of a diolefin. If a diolefin is used, the amount should be so limited that the rubbery copolymer has an iodine number not greater than about 20. This will generally correspond to no more than about 10 percent by weight of diolefin monomer units in the copolymer.

The alpha-monoolefins used to make any rubbery copolymer are those having the formula $CH_2=CHR$, in which R may be hydrogen or a saturated alkyl radical such as methyl, ethyl, n-propyl, isopropyl and the like. Preferred rubbery copolymers are those in which the alpha olefins used are ethylene or propylene, the weight ratio of ethylene monomer units to propylene monomer units in the copolymer being from 20/80 to 80/20, preferably between 35/65 and 65/35.

Diolefins suitable for use in making the rubbery copolymers are non-conjugated straight-chain or cyclic diene hydrocarbons which are copolymerizable with the alpha-monoolefins. Examples of suitable diolefins are straight or branched chain diolefins, such as those in which both double bonds are terminal as in 1,4-pentadiene, 1,5-hexadiene, 2-methyl-1,5-hexadiene, 3,3-dimethyl-1,5-hexadiene, 1,7-octadiene, 1,9-decadiene, 1,19-eicosadiene, and the like; diolefins in which only one double bond is terminal such as 1,4-hexadiene, 1,9-octadecadiene, 6-methyl-1,5-heptadiene, 7-methyl-1,6-octadiene.

The graft copolymer is formed by reacting acrylonitrile and styrene with the diolefins just described by methods set forth in the aforesaid U.S. 3,489,821 and U.S. 4,166,081.

The preferred ASA polymer made according to this method is a blend of such a graft copolymer with a copolymer of styrene and acrylonitrile.

The relative amounts of resin and rubber component in the compositions are defined as the resin-to-rubber ratio, which is the ratio of the total amount of resinous material in the composition (i.e. In the graft copolymer) to the amount of copolymer rubber (i.e., the rubbery spine or base polymer used in making the graft copolymer). Thus a mixture of 50 parts of resin with 50 parts of a graft copolymer of 25 parts of resinforming monomer on 25 parts of rubber would have a resin-to-rubber ratio of 75—25. The resin-to-rubber ratio may vary from about 60:40 to about 95:5, depending upon the particular resin-graft polymer system in question, and upon the properties desired in the product. Increasing rubber content gives increasing impact strength, with some decrease in rigidity and hardness. For most purposes, the best rubber-to-resin ratio will be in the range 70:30 to 90:10.

A commercially available ASA polymer in accordance with this aspect of the invention contains 51 percent styrene, 26 percent acrylonitrile and 23 percent EPDM rubbery copolymer.

In preparing the ASA polymers, any of the vinyl aromatic compounds disclosed herein may be employed. Unsaturated nitriles that can be employed include acrylonitrile, as well as alkyl substituted acrylonitrile such as methacrylonitrile.

8

## THE SMA POLYMER COMPONENT

The SMA polymer is a copolymer of styrene and maleic anhydride optionally modified with other monomers and polymers. Thus the styrene and maleic anhydride can be co-reacted with monomers, such as methyl methacrylate or polymers, such as polybutadiene. The co-reacted polymers can be blended with other polymers such as ABS polymers (graft polymer of acrylonitrile and styrene with polybutadiene and blends of acrylonitrile butadiene copolymer with styrene acrylontrile copolymer).

Suitable SMA polymers are disclosed in U.S. Patent 3,509,110. While the patent is directed to a particular process for making the SMA polymer, the patent is appropriate for disclosing the basic SMA polymer composition. Thus, the SMA polymers, basically comprise a copolymer of a vinyl aryl monomer and an ethylenically unsaturated dicarboxylic acid. As shown in the patent the polymer may be formed by reacting the vinyl aryl monomer with a half ester of an ethylenically unsaturated dicarboxylic acid.

Aryl vinyl monomers useful in the making of the SMA polymers include styrene, ortho-methylstyrene, meta-methylstyrene, para-methylstyrene, ethylstyrene, dimethylstyrene, divinylbenzene, alpha-methylstyrene, para-methoxystyrene, para-chlorostyrene, 2,4-dichlorostyrene, 2,5-dichlorostyrene, parabromo-styrene, alpha-methyl-p-methylstyrene, para-isopropylstyrene, vinylnaphthalene and the like. Mixtures of two or more of these aryl vinyl monomers may be used if desired.

The half esters of an ethylenically unsaturated dicarboxylic acid are prepared from the following acids: maleic acid, fumaric acid, itaconic acid, citraconic acid, mesaconic acid, ethyl maleic acid, methyl itaconic acid, chloromaleic acid, dichloro-maleic acid, bromomaleic acid, dibromomaleic acid and the like.

The half esters are formed from the ethylenically unsaturated dicarboxylic acid or its anhydride (or mixtures of the same) and the desired alcohol. Suitable alcohols are the primary and secondary alkanols containing up to 6 carbon atoms, such as methyl, alcohol, ethyl alcohol, n-propyl alcohol, n-butyl alcohol, sec-butyl alcohol and n-pentyl alcohol; halogenated alkanols having up to 6 carbon atoms, such as 2,3-dichloro-1-propanol and 2-bromo-1-propanol, arylakyl alcohols such as benzyl alcohol; eyelic alcohols having up to 6 carbon atoms, such as cyclopentanol, cyclohexanol and tetrahydrofurfuryl alcohol; ether alcohols such as 2-butoxy ethanol and the ethyl ether of diethylene glycol; phosphorous containing alcohols such as diethyl monobutanol phosphate; nitrogen containing alcohols such as N-N-dimethyl ethanol amine, and the like.

The aryl vinyl monomer and ester of an ethylenically unsaturated dicarboxylic acid or anhydride are reacted in the proportion of about 50 to 95 weight percent monovinyl aromatic compound with the remainder being acid or anhydride.

Other suitable SMA polymers are prepared in accordance with U.S. Patent 4,278,768. This patent teaches that SMA polymers can be prepared by direct copolymerization of a monovinyl aromatic monomer with an ethylenically unsaturated dicarboxylic acid anhydride by continuous controlled addition of the more reactive anhydride monomer to produce the copolymer of the desired composition.

The monovinyl aromatic monomers useful in the copolymers are styrene, alpha-methylstyrene, nuclear-methylstyrenes, ethylstyrene, isopropylstyrene, tertbutylstyrene, chlorostyrenes, dichloro-styrenes, vinylnaphthalene and mixtures of these.

Suitable anhydrides are the anhydrides of maleic acid, fumaric acid, itaconic acid, citraconic acid, mesaconic acid, ethyl maleic acid, methyl itaconic acid, chloromaleic acid, dichloromaleic acid, bromomaleic acid, dibromomaleic acid, and mixtures thereof and the like.

The anhydride copolymers may contain from 5 to 50 mole percent of anhydride and 95 to 50 mole percent of monovinyl aromatic monomer.

For the rubber-modified copolymers, the starting copolymers may be any of the above anhydride copolymers into which 5 to 40 percent by weight of one of the known rubbers has been incorporated. The rubbers may be incorporated into the anhydride copolymers by blending, mixing, or copolymerizing the monomers in the presence of the rubber. A method of preparing the rubber-modified anhydride copolymer is that taught in U.S. Patent No. 3,919,345, wherein a rubber is dissolved in monovinyl aromatic monomer, polymerization initiated and ethylenically unsaturated dicarboxylic acid anhydride is added continuously to the polymerizing mixture at a rate sufficient to maintain the concentration of anhydride low.

Suitable rubbers, or elastomers, include conjugated 1,3-diene rubbers, styrene-diene copolymer rubbers, acrylonitrile-diene copolymer rubbers, ethylene-propylene-diene terpolymer rubbers, acrylate-diene copolymer rubbers, and mixtures thereof.

Preferred rubbers are diene rubbers such as homopolymers of conjugated dienes such as butadiene, isoprene, chloroprene, and piperylene and cpolymers of such dienes with up to 50 mole percent of one or more copolymerizable mono-ethylenically unsaturated monomers, such as styrene, substituted styrenes, acrylonitrile, methacrylonitrile and isobutylene.

Other suitable SMA polymers are prepared as described in U.S. Patent 4,311,806. This patent teaches rubber-modified copolymers of a vinyl aryl monomer and unsaturated dicarboxylic acid anhydride. The basic polymer may also include a termonomer selected from acrylates and methacrylates and unsaturated nitriles wherein the relative proportion of monomers are 50 to 85 percent of the vinyl aryl monomer, 15 to 30 percent of the anhydride and 0 to 20 percent of the termonomer wherein the monomers are polymerized in the presence of 5 to 25 percent by weight of a rubber having a glass transistion temperature below 0°C. The patentees also provide for blending such SMA polymers with graft copolymer of from 20 to 40 percent by weight of a monomer selected from the group comprising methyl methacrylate and acrylonitrile and 80 to 60% by weight of a vinyl aromatic monomer said copolymer being grafted onto from 10 to 60%, based on the weight of the composition, of a substrate rubber having a glass transition temeprature below 0°C.

Styrene is preferably used in forming these polymers, but the styrene can be replaced in whole or in part by other vinylaromatic monomers such a-methyl styrene, chlorostyrene, bromostyrene, p-methylstyrene and vinyl toluene. Similarly the maleic anhydride can be replaced in whole or in part by another unsaturated dicarboxylic anhydride such as itaconic, aconitic or citraconic anhydride. The termonomer, where present is most preferably methyl methacrylate.

The proportions of the monomers preferably employed give an anhydride content of from 20 to 30% and a methyl methacrylate content of 5 to 15%.

The SMA polymer comprises 5 to 25% by weight of the rubber component and preferably from 10 to 25% by weight.

The rubber is conventionally a diene rubber such as polybutadiene or a butadiene based block or radial-block rubber. Other rubbers such as EPDM rubber, polypentenamer, polyisoprene, polychloroprene, polyacrylate rubbers and the like can, if desired, also be used.

Rubber modified copolymers are prepared by polymerizing the monomers in the presence of the rubber in such a way that a uniform copolymer of the polymerizing monomers is grafted on to the rubber substrate and a matrix copolymer of essentially the same composition as the graft copolymer is simultaneously generated. Suitable methods of producing such rubber modified copolymers are well known in the art and a typical process is described in U.S. Pat. No. 3,919,354.

The optional additional polymer component used with the SMA polymer is typically an ABS or MBS type polymer, that is to say, a diene rubber substrate grafted with styrene and either acrylontrile, methyl methacrylate or a mixture of these monomers. However the rubber need not be the conventional polybutadiene or butadiene/styrene copolymer since any rubber with a glass transition temperature below 0°C. can be used. Such rubbers include those which may provide the substrate for the SMA polymer described above.

The presence of the optional additional polymer components confers additional benefits in terms of impact strength and modulus so that the inclusion of from 10 to 35% by weight of the component in the polyblends of the invention is a preferred feature.

## THE CONDENSATION POLYMERS

The Condensation Polymers useful in this invention are polymers prepared by polymerization in which the reaction of small moleculars to form the polymer molecules is a condensation reaction, producing other small molecules in addition to the polymer molecules. Common types of condensation polymers are polyesters prepared from dicarboxylic acids and glycols, and polyamides prepared from dicarboxylic acids and diamines. The thermoplastic condensation polymers are generally employed.

Suitable polyesters include aromatic polyesters such as the reaction products of a bisphenol and a dicarboxylic compound, such as a mixture of iso and terephthalic acid. Such polyesters are described in detail in U.S. Patent 4,319,007. Polyalkylene terephthalates, such as polyethylene terephthalates and polybutylene terephthalates can be employed.

Very useful in this invention are the polycarbonates which are reaction products of bisphenol and phosgene.

Specific examples of the polyamides are the various forms of nylon.

The Condensation Polymers are described in detail in Encyclopedia of Polymer Science and Technology, H. F. Mark and N. G. Gaylord, Interscience Publishers, 1972, and Handbook of Common Polymers, W. J. Roff and J. R. Scott, CRC Press, 1971.

## AUXILIARY POLYMER COMPONENT

In addition to binary blends of the polyolefin graft polymer component and the Blend Polymer component, highly useful compositions can be proposed by blending in as an auxiliary component, a polymer or copolymer of an ethylenically unsaturated polymerizable compound. Such polymerizable compounds use any of those disclosed hereinabove for preparation of the polyolefin graft polymers.

When the polyolefin graft polymer is a vinyl halide polyolefin graft polymer, it is highly desirable for the auxiliary polymer component to be a vinyl halide homopolymer or copolymer with a copolymerizable ethylenically unsaturated monomer. The vinyl halide monomers and the comonomers are any of those described hereinbefore.

## OPTIONAL ADDITIVES

The composition of the invention can also contain various functional additives which additives are conventional in the preparation of polymer molding compositions. Typically, these additives include thermal and/or light stabilizers as well as external and internal lubricants and processing aids for the polyolefin graft polymer component and the other polymers of the blends of the invention.

Stabilizers suitable for use in making the polymer compositions of the invention include materials known to stabilize the polymer components against the degradation action of heat and/or light. The include known stabilizers, both organic and inorganic, such as metal salts of mineral acids, salts of organic carboxylic acids, e.g., carboxylic acids of 6 to 18 carbon atoms, organo-tin compounds, epoxides, amine compounds and organic phosphites. Conveniently, an organo-tin compound, such as a methyl tin mercaptide, is employed as a stabilizer.

A more detailed description of suitable stabilizers, lubricants and processing aids for incorporation into the compositions of the invention is presented in US Patent 4,319,002.

Additional classes of additives known for use in polymers which can be added optionally to the compositions of the invention in addition to the aforementioned stabilizers, lubricants and processing aids include pigment, dyes and fillers as described in L. R. Brecker, *Plastics Engineering,* March 1976, "Additives 76", pages 3—4.

In general, the amount of each type of the aforementioned optional additive employed in the present composition is about 0.01 to about 5 weight percent, preferably about 0.1 to about 3 weight percent, based on the total resin composition.

When the compositions of the invention contain vinyl halide polymer components, they are essentially of the rigid vinyl halide resin type which contain no more than about 10 weight percent of a plasticizer for vinyl halide grade polymer and preferably are free of said plasticizing additive. Typical suitable plasticizer additives (which are generally organic compounds) conventionally employed in polyvinyl halide compositions include, for example, the esters of aliphatic alcohols of medium chain length, of 7 to about 11 carbon atoms, with phenyl dicarboxylic acids, such as di-n-octyl phthalate and di-iso-nonyl phthalate as well as organic phosphate esters, such as cresyl-diphenyl-phosphate and octyl diphenyl-phosphate. The chemical structure and technology of plasticizers conventionally employed in polyvinyl halide compostions is more particularly discussed in L. R. Brecker, *op. cit.* page 5.

PREPARATION OF BLENDS

The compositions of the invention can be prepared by conventional milling and molding techniques. Generally, the component polymers (and, if desired, the above-described optional additives) are added as a particulate solid mixture to a roll mill or a Banbury type mixer and milled at an elevated temperature conventional for processing rigid vinyl halide polymer compositions. The resultant polymer blend obtained as a product from the milling and mixing operation is molded by either an injection or compression molding technique or extruded to produce articles of particular desired shapes at elevated temperature and pressure conditions which are conventional in molding rigid polyvinyl halide compositions. Desirably an injection molding technique is employed to prepare the aforementioned articles which can be in various shapes including bars, plates, rings, rods, as well as sheets and films. Physical or chemical blowing agents can also be added to the moulding compounds according to the invention in order to produce a foam structure under suitable operating conditions.

In addition to the above mentioned other additives, other polymeric materials can be blended with the blend compositions of this invention.

THE EXAMPLES

The following examples further illustrate the various aspects of the invention but are not intended to limit it. Various modifications can be made in the invention as claimed without departing from the spirit and scope thereof. Where not otherwise specified in this specification and claims, temperatures are given in degrees centigrade, and all parts and percentages are by weight.

In the following examples, blends were prepared of the following polymer components:

Vinyl Polymer A

In a 18.9 l stainless steel reactor equipped with a helical up-pumping agitator, was charged 1.81 kg of a commercially pelletized blend of polyolefins containing approximately 85 weight percent of an EPDM elastomer having a molar ratio of ethylene to propylene of about 72 percent to 28 percent, and 3 double bonds of unsaturation as 1,4-hexadiene per 1,000 carbon to carbon bonds (db/1,000 C—C) of approximately 170,000 weight average molecular weight with about 15 weight percent high density polyethylene. The particle size of the pelletized blend was about 3 mm in diameter by 1.5 mm in thickness. The vessel was pressurized with nitrogen to 12.7 kg/cm$^3$ and evacuated. Nine ml of a solution of 0.5 ml of a 75% solution of the t-butyl peroxy neodecanoate in mineral spirits (free radical initiator) and 5.44 kg of vinyl chloride containing 5% isobutane÷were charged and the agitator was operated at 40 rpm and the jacket heated at 60°C. The pressure gradually increased to a maximum of 10.9 kg/cm$^2$ and then fell. The reaction was allowed to proceed for 4 hours and then the unreacted monomer was recovered. Then 18 ml of a butyltin mercaptoactate ester were added with 1.36 kg of VCM. The mixture was heated and stirred for 20 minutes. The unreacted monomer was recovered. The product was degassed under vacuum at 80°C for 2.5 hours. The yield of white pellets was 5.22 kg with a calculated polyolefin content of 35%. It was estimated that the product contained at least 21% polyolefin in the grafted form.

Vinyl Polymer B

In a still larger preparation than used in preparing Vinyl Polymer A, 908 kg of the polyolefin used to make Vinyl Polymer A, were charged to a reactor and heated initially at 60° followed by cooling the jacket to maintain a maximum internal pressure of 10.5 kg/cm$^3$. The reaction was carried out for 2.5 hrs. followed by degassing, etc. The recovered product 2,860 kg has a calculated polyolefin content of 31.5%. The isolated product was 99+% in the form of free flowing pellets. Only small amounts of powder (0.5%) and agglomerated pellet and scale (0.3%) were observed in the product.

ASA Polymer — I

A polymer of styrene and acrylonitrile and a chlorinated polyethylene, sold commercially as ACS—960 by the Showa Denko Company. The polymer had a number average molecular weight of about 38,000, a weight average molecular weight of about 120,000 and a ratio of weight to number average molecular weight of 3.22. The proportion of components was about 40 percent styrene, about 15 percent acrylonitrile and about 45 percent chlorinated polyethylene, all percentages by weight based on the weight of graft polymer.

ASA Polymer — II

A polymer of styrene and acrylonitrile and acrylonitrile and acrylic rubber sold commercially as ASA—1,000 by Stauffer Chemical Company. This polymer has a number average moecular weight of about 45,000, a weight average molecular weight of about 130,000, and a ratio of weight to number average molecular weight of 2.87. The polymer contains about 56 percent styrene, about 15 percent acrylonitrile and about 29 percent acrylic rubber, all percentages by weight.

ASA Polymer — III

A polymer of styrene acrylonitrile and acrylic rubber sold commercially as VITAX®—8,000 by Hitachi Chemical Company. The number average molecular weight is about 42,000, the weight average molecular weight is about 165,000 and the ratio of weight to number average molecular weight is 3.91. The polymer contains about 58 percent styrene monomer, about 23 percent acrylonitrile and about 19 percent acrylic rubber, all percentages by weight.

ASA Polymer — IV

A polymer of styrene, acrylonitrile and EPDM sold commercially as Rovel® 700 by the Uniroyal Company. This polymer has a number average molecular weight of about 44,000, a weight average molecular weight of about 220,000, and a ratio of weight to number average molecular weight of 4.95. The polymer contains about 51 percent styrene, about 26 percent acrylonitrile and about 23 percent EPDM, all percentages by weight.

SMA Polymers I and II

The impact modified copolymers of styrene and maleic anhydride sold commercially as Cadon® 112 and Cadon 127 by Monsanto shall be referred to herein as SMA Polymers I and II, respectively. These polymers are prepared according to U.S. Patent 4,223,096. These impact modified compositions are also described in U.S. Patent 4,311,806.

SMA Polymer — III

An impact modified copolymer of styrene and maleic anhydride sold commercially as Dylark®-700 by Atlantic Richfield Company, Dylark-700 contains about 83 weight percent styrene, 7.5 weight percent maleic anhydride and 9.1 weight percent polybutadiene.

SMA Polymer IV and V

The copolymers of styrene-maleic anhydride sold commercially as Dylark-232 and Dylark-332 by Atlantic Richfield Company shall be referred to herein as SMA Polymers IV and V respectively. Dylark-232 contains about 72 weight percent styrene and 8 weight percent maleic anhydride. Dylark-332 contains about 86 weight percent styrene and about 14 weight percent maleic anhydride.

Polycarbonate Polymer

The polycarbonate polymer commercially sold by General Electric Company under the name Lexan® 101. Lexan 101 is a high viscosity polycarbonate polymer. This polymer has a number average molecular weight of about 13,000 and a weight average molecular weight of about 35,000. The ratio of the weight average molecular weight to number average molecular weight is 2.53.

Polyarylate Polymer

The polyarylate polymer was prepared by reacting bis-phenol-A with diphenyl phthalate monomer in the presence of a catalyst. The intrinsic viscosity of this polymer was approximately 0.4 dl/g.

**0 137 518**

Polybutylene Terephthalate

The polybutylene terephthalate polymer commercially sold as Valox® 310 by General Electric Company.

All polymer used in these examples were dried before preparing the blends. The blends were prepared on a two-roll Farrell mill heated using a hot oil system. A front roll temperature of 182°C and a back roll temperature of 171°C was used. The milling time was kept to a minimum necessary for obtaining good mixing, normally about 4 to 5 minutes. Due care was taken to obtain a good lateral mixing on the mill. The blend was removed from the mill in the form of a sheet and quickly cut into small pieces. These pieces were coarse ground after cooling. The injection molded tensile and flexural bars were used for evaluating mechanical properties. The injection molding of samples having appropriate ASTM configurations was carried out using an Arburg injection molding machine (Model 221E—150). Table 1 shows the details of the testing procedures used to obtain various properties.

TABLE 1
Summary of Testing and Characterization Methods

| Property/Data | ASTM Method | Instrument Used | Number of Samples | Type of Sample | Comments |
|---|---|---|---|---|---|
| Tensile Properties<br>  Modulus<br>  Strength (Yield)<br>  Elongation (Yield) | D638 | Instron-<br>Model TTC | 5 | Injection Molded<br>Std dog bone shape<br>Tensile bar.<br>(0.32 cm × 1.27 cm/<br>15.24—1.27 cm) | Strain rate of<br>0.51 cm/minute |
| Izod Impact<br>  Room Temperature<br>  (23.3°C) or<br>  Low Temperature<br>  (−28.8°C) | D256 | Izod Impact<br>Tester | 3 | Injection Molded<br>Flex Bars<br>(1.27 cm × 0.32 cm<br>× 12.7 cm) | Three bars tested at<br>both sprue and vent<br>ends. All samples were<br>notched using<br>standard size. |
| Specific Gravity | D792 | Standard<br>Balance | 2 | Injection Molded Bar | Calculated from<br>weight loss of the<br>sample after<br>immersing in<br>distilled water. |
| Heat Distortion<br>  Temperature | D648 | Standard Heat<br>Deflection<br>Bath | 2 | Injection Molded<br>Flex Bar<br>(1.27 cm × 0.32 cm/<br>12.7 cm) | Tested at 18.54<br>kg/cm$^2$ in silicone.<br>Bath heated at<br>2°C/min. Sample bar<br>tested edgewise. Two<br>different conditioning<br>methods used for each<br>composition:<br>  a) 48 hours at 50°C<br>  b) 24 hours at 70°C |
| Flexural Properties<br>  Modulus<br>  Strength (Yield)<br>  Strain (Yield) | D790 | Instron<br>Model-TMS | 5 | Injection Molded<br>Flexural Bar<br>(1.27 cm × 0.32 cm<br>× 12.7 cm) | Cross head speed of<br>1.27 cm per minute |

0 137 518

The ASA Polymer Examples
Examples 1—5
Blends of various proportions of Vinyl Polymer B and ASA Polymer I were prepared as indicated in Table 2 using the above described blending procedures. The blends and individual components were tested according to the procedures listed in Table 1, and the results are shown in Table 2.

TABLE 2

| Example Number | Weight Ratio of ASA Polymer I to Vinyl Polymer B | Notched Izod Impact Strength at | | Annealed Heat Distortion Temperature (18.54 kg/cm$^2$) | |
|---|---|---|---|---|---|
| | | 23.3°C | −28.8°C | 48 H at 50°C | (24 H at 70°C) |
| | | cmkg/cm | | °C | |
| 1 | 100:0 | 15.2 | 2.34 | 80 | (88) |
| 2 | 90:10 | 49.0 | 3.32 | 77 | (86) |
| 3 | 80:20 | 68.5 | 5.01 | 76 | (85) |
| 4 | 70:30 | 87.0 | 4.73 | 75 | (84) |
| 5 | 60:40 | 98.5 | 6.31 | 74 | (82) |

Examples 6—10
Blends of various proportions of Vinyl Polymer B and ASA Polymer II were prepared as indicated in Table 3 using the above described blending procedures. The blends and individual components were tested according to the procedures listed in Table 1, and the results are shown in Table 3.

TABLE 3

| Example Number | Weight Ratio of ASA Polymer II to Vinyl Polymer B | Notched Izod Impact Strength at | | Annealed Heat Distortion Temperature (18.54 kg/cm$^2$) | |
|---|---|---|---|---|---|
| | | 23.3°C | −28.8°C | 48 H at 50°C | (24 H at 70°C) |
| | | cmkg/cm | | °C | |
| 6 | 100:0 | 32.6 | 2.12 | 81 | (90) |
| 7 | 90:10 | 51.1 | 3.37 | 78 | (88) |
| 8 | 80:20 | 77.2 | 3.86 | 77 | (87) |
| 9 | 70:30 | 81.6 | 4.24 | 75 | (85) |
| 10 | 60:40 | 87.6 | 8.27 | 74 | (83) |

Examples 11—15
Blends of various proportions of Vinyl Polymer B and ASA Polymer III were prepared as indicated in Table 4 using the above described blending procedures. The blends and individual components were tested according to the procedures listed in Table 1, and the results are shown in Table 4.

TABLE 4

| Example Number | Weight Ratio of ASA Polymer III to Vinyl Polymer B | Notched Izod Impact Strength at 23.3°C | −28.8°C | Annealed Heat Distortion Temperature (18.54 kg/cm²) 48 H at 50°C | (24 H at 70°C) |
|---|---|---|---|---|---|
| | | cmkg/cm | | °C | |
| 11 | 100:0 | 13.1 | 2.61 | 92 | (99) |
| 12 | 90:10 | 16.3 | 2.01 | 88 | (96) |
| 13 | 80:20 | 35.9 | 3.26 | 85 | (94) |
| 14 | 70:30 | 67.5 | 3.54 | 82 | |
| 15 | 60:40 | 76.7 | 6.36 | 80 | |

Examples 16—20

Blends of various proportions of Vinyl Polymer B and ASA Polymer IV were prepared as indicated in Table 4 using the above described blending procedures. The blends and individual components were tested according to the procedures listed in Table 1, and the results are shown in Table 5.

TABLE 5

| Example Number | Weight Ratio of ASA Polymer IV to Vinyl Polymer B | Notched Izod Impact Strength at 23.3°C | −28.8°C | Annealed Heat Distortion Temperature (18.54 kg/cm²) 48 H at 50°C | (24 H at 70°C) |
|---|---|---|---|---|---|
| | | cmkg/cm | | °C | |
| 16 | 100:0 | 36.8 | 8.98 | 83 | (92) |
| 17 | 90:10 | 69.6 | 10.28 | 81 | (90) |
| 18 | 80:20 | 81.6 | 13.00 | 80 | (89) |
| 19 | 70:30 | 88.7 | 13.87 | 78 | (87) |
| 20 | 60:40 | 92.5 | 24.75 | 76 | (84) |

Examples 21—24

Blends of various proportions of a commercial injection molding grade of PVC resin sold by Occidental Chemical Corporation under the name B—221, Vinyl Polymer B and ASA Polymer I were blended as shown in Table 6 using the above described blending procedures. The weight ratio of PVC to Vinyl Polymer B was 60 to 40. The blends were tested according to the procedures in Table 1 and the results are reported in Table 6.

TABLE 6

| Example Number | Weight Ratio of Vinyl Polymer* to ASA Polymer I | Notched Izod Impact Strength at 23.3°C | −28.8°C | Annealed Heat Distortion Temperature (18.54 kg/cm²) 48 H at 50°C | (24 H at 70°C) |
|---|---|---|---|---|---|
| | | cmkg/cm | | °C | |
| 21 | 80:20 | 115.9 | 5.44 | 71 | (74) |
| 22 | 60:40 | 81.1 | 5.33 | 72 | (78) |
| 23 | 40:60 | 54.4 | 4.19 | 74 | (81) |
| 24 | 20:80 | 45.7 | 4.19 | 76 | (84) |

* Weight ratio of PVC to Vinyl Polymer B = 60:40.

Examples 25—28

Blends of various proportions of a commercial PVC resin sold by Occidental Chemical Corporation under the name B—221, Vinyl Polymer B and ASA Polymer II were blended as shown in Table 7 using the above described blending procedures. The weight ratio of PVC to Vinyl Polymer B was 60 to 40. The blends were tested according to the procedures in Table 1 and the results are reported in Table 7.

TABLE 7

| Example Number | Weight Ratio of Vinyl Polymer* to ASA Polymer II | Notched Izod Impact Strength at | | Annealed Heat Distortion Temperature (18.54 kg/cm$^2$) | |
|---|---|---|---|---|---|
| | | 23.3°C cmkg/cm | −28.8°C | 48 H at 50°C °C | (24 H at 70°C) |
| 25 | 80:20 | 127.8 | 5.44 | 71 | (76) |
| 26 | 60:40 | 114.2 | 5.00 | 72 | (79) |
| 27 | 40:60 | 93.6 | 3.32 | 75 | (83) |
| 28 | 20:80 | 65.3 | 2.94 | 76 | (86) |

* Weight ratio of PVC to Vinyl Polymer B = 60:40.

Examples 29—32

Blends of various proportions of a commercial PVC resin sold by Occidental Chemical Corporation under the name B—221, Vinyl Polymer B and ASA Polymer III were blended as shown in Table B using the above described blending procedures. The weight ratio of PVC to Vinyl Polymer B was 60 to 40. The blends were tested according to the procedures in Table 1 and the results are reported in Table 8.

TABLE 8.

| Example Number | Weight Ratio of Vinyl Polymer* to ASA Polymer III | Notched Izod Impact Strength at | | Annealed Heat Distortion Temperature (18.54 kg/cm$^2$) | |
|---|---|---|---|---|---|
| | | 23.3°C cmkg/cm | −28.8°C | 48 H at 50°C °C | (24 H at 70°C) |
| 29 | 80:20 | 113.2 | 4.35 | 72 | (80) |
| 30 | 60:40 | 101.7 | 5.33 | 75 | (84) |
| 31 | 40:60 | 55.5 | 4.57 | 79 | (87) |
| 32 | 20:80 | 2.6 | 3.10 | 85 | (92) |

* Weight ratio of PVC to Vinyl Polymer B = 60:40.

Examples 33—36

Blends of various proportions of a commercial PVC resin sold by Occidental Chemical Corporation under the name B—221, Vinyl Polymer B and ASA Polymer IV were blended as shown in Table 9 using the above described blending procedures. The weight ratio of PVC to Vinyl Polymer B was 60 to 40. The blends were tested according to the procedures in Table 1 and the results are reported in Table 9.

TABLE 9

| Example Number | Weight Ratio of Vinyl Polymer* to ASA Polymer IV | Notched Izod Impact Strength at 23.3°C | −28.8°C | Annealed Heat Distortion Temperature (18.54 kg/cm$^2$) 48 H at 50°C | (24 H at 70°C) |
|---|---|---|---|---|---|
| | | cmkg/cm | | °C | |
| 33 | 80:20 | 117.5 | 6.96 | 70 | (74) |
| 34 | 60:40 | 94.7 | 10.01 | 72 | (79) |
| 35 | 40:60 | 68.5 | 6.09 | 76 | (84) |
| 36 | 20:80 | 51.1 | 7.78 | 80 | (89) |

* Weight ratio of PVC to Vinyl Polymer B = 60:40.

Example 37

ASA Polymer I was blended with Vinyl Polymer B and B—221 PVC resin made by Occidental Chemical Corporation. The proportions of these polymers are shown in Table 10. This blend composition was tested for different properties according to the procedures described in Table 1. The results are shown in Table 10.

Example 38

ASA Polymer III was blended with B—221 PVC resin (made by Occidental Chemical Corporation) and Vinyl Polymer B. The proportions of these polymer components are shown in Table 10. The properties of this blend were measured according to previously described procedures in Table 1, and are listed in Table 10.

Example 39

A blend of B—221 PVC resin (Occidental Chemical Corporation), Vinyl Polymer BN and ASA Polymer IV was prepared using a procedure described earlier. The proportions of various components are listed in Table 10, along with the properties of the blend which were measured according to procedures described in Table 1.

TABLE 10

| Example No.: | 37 | 38 | 39 |
|---|---|---|---|
| *Vinyl Polymers<br>Mechanical Properties | *Vinyl Polymer:<br>ASA Polymer I<br>(60:40) | *Vinyl Polymer:<br>ASA Polymer III<br>(50:50) | *Vinyl Polymer<br>ASA Polymer IV<br>(40:60) |
| Tensile Strength kg/cm$^2 \times 10^{-4}$ | 3.81 | 4.38 | 3.89 |
| Tensile Modulus kg/cm$^2 \times 10^{-6}$ | 2.17 | 2.37 | 2.27 |
| Elongation % | 3.07 | 3.56 | 2.92 |
| Notched Izod Impact cmkg/cm | 84.9 | 76.2 | 75.6 |
| Notched Izod Impact cmkg/cm | 3.59 | 3.97 | 8.98 |
| Flexural Strength kg/cm$^2 \times 10^{-4}$ | 6.66 | 8.01 | 6.98 |
| Flexural Modulus kg/cm$^2 \times 10^{-6}$ | 2.24 | 2.56 | 2.32 |
| Percent Strain | 4.58 | 4.8 | 4.59 |
| Rockwell Hardness | R—89 | R—94 | R—85 |
| Shore Durometer Hardness | D—76 | D—76 | D—76 |
| Specific Gravity | 1.23 | 1.17 | 1.12 |
| Mold Shrinkage inch/inch | 0.0034 | 0.004 | 0.0016 |
| Thermal Properties | | | |
| Heat Distortion Temperature (18.54 kg/cm$^2$) | 72 | 77 | 75 |
| Heat Distortion Temperature (annealed) | 79 | 86 | 84 |
| UL—94 Rating ⅛" (0.32 cm) | V—O | N—C | NC |
| ¹⁄₁₆" (0.16 cm) | V—O | N—C | NC |
| Brabender Torque Rheometer Data | | | |
| Fusion Time (seconds) | 13 | 12.8 | 18.2 |
| Maximum Fusion Torque (meter-grams) | 3460 | 4480 | >6000 |
| Equilibrium Torque (meter-grams) | 780 | 1240 | 1160 |
| Decomposition Time (minutes) | 13.1 | 5.3 | 9.1 |

* Weight ratio of PVC to Vinyl Polymer B = 60:40.

Examples 40—43

Blends of Vinyl Polymer B and ASA Polymer IV were prepared in different proportions indicated in Table 11. 55-gram samples of these blends were tested in a Brabender Torque Rheometer. The results of these tests are shown in Table 11.

# 0 137 518

TABLE 11
Brabender Torque Rheometer Data

| Example No. | 40 | 41 | 42 | 43 |
|---|---|---|---|---|
| Vinyl Polymer B:ASA Polymer IV | 10:90 | 20:80 | 30:70 | 40:60 |
| Ram Pressure, grams | 7500 | 7500 | 7500 | 7500 |
| R.P.M. | 63 | 63 | 63 | 63 |
| Max Fusion Peak (seconds) | 16.4 | 21.2 | 18.0 | 16.8 |
| Max Fusion Torque (meter-grams) | 5250 | 6300 | 5000 | 4250 |
| Equilibrium Torque (meter-grams) | 1250 | 1400 | 1350 | 1350 |
| Decomposition | >30 | >30 | 27.3 | 25.0 |
| Stock Held @ °C | 204 | 204 | 204 | 204 |

The foregoing examples illustrate that the blends of various ASA polymers with the polyolefin graft polymers possess excellent notched impact strengths and high heat distortion temperatures. Also, the blends of the vinyl halide polymer, the polyolefin graft polymer and various ASA polymers have high impact strengths and enhanced heat distortion temperatures. These blends also have good mechanical properties.

The SMA Polymer Examples
Examples 1—2

A blend of a commercial injection molding grade of PVC resin sold by Occidental Chemical Corporation under the name B—221, SMA Polymer I and Vinyl Polymer B was prepared using the above described procedures. Also a blend of the same PVC resin and SMA Polymer III and Vinyl Polymer B was prepared. The proportions of the components in these blends are shown in Table 2. These blends were tested according to the procedures listed in Table 1. The results of these tests are shown in Table 2.

20

# 0 137 518

## TABLE 2

|  | Example 1 Vinyl Polymer* SMA Polymer I (60:40) | Example 2 Vinyl Polymer* SMA Polymer III (40:60) |
|---|---|---|
| **Mechanical Properties** | | |
| Tensile Strength kg/cm$^2$ | 3.56 | 3.91 |
| Tensile Modulus kg/cm$^2$ | 2.14 | 2.20 |
| Elongation % | 2.63 | 2.84 |
| Notched Izod Impact at 23.3°C cmkg/cm | 25.6 | 80.5 |
| Notched Izod Impact at −28.8°C cmkg/cm | 5.58 | 9.57 |
| Flexural Strength kg/cm$^2$ | 7.02 | 7.40 |
| Flexural Modulus kg/cm$^2$ | 2.36 | 23.90 |
| Percent Strain | 4.19 | 4.67 |
| Rockwell Hardness | R—89 | R—95 |
| Shore Durometer Hardness | D—77 | D—77 |
| Mold Shrinkage in/in | 0.0044 | 0.0046 |
| Specific Gravity | 1.14 | 1.2 |
| **Thermal Properties** | | |
| Heat Distortion Temperature (18.54 kg/cm$^2$)°C | 80 | 73 |
| Heat Distortion Temperature (annealed) °C | 89 | 79 |
| UL—94 Rating $\frac{1}{8}$″ Thickness (0.32 cm) | V—1 | NC |
| $\frac{1}{16}$″ Thickness (0.16 cm) | V—1 | NC |
| **Brabender Torque Rheometer Data** | | |
| Fusion Time (seconds) | 19.8 | 16.2 |
| Maximum Fusion Torque (meter-grams) | 5200 | 4300 |
| Equilibrium Torque (meter-grams) | 950 | 1000 |
| Decomposition Time (minutes) | 9.0 | 16.3 |

* Weight Ratio of PVC to Vinyl Polymer B = 60:40.

### Examples 3—8

Blends of Vinyl Polymer B, PVC resin B—221 and SMA Polymer I were prepared in various proportions. These proportions are indicated in Table 3. The notched izod impact strengths and heat distortion temperatures of these blends were tested according to the procedures described in Table 1. The results of these tests are given in Table 3.

21

**0 137 518**

TABLE 3

| Example No. | Composition Vinyl Polymer*:SMA Polymer I | Notched Izod Impact Strength at | | Heat Distortion Temperature annealed (18.54 kg/cm²) | |
|---|---|---|---|---|---|
| | | 23.3°C | −28.8°C | 48 H at 50°C | (24 H at 70°C) |
| | | cmkg/cm | | °C | |
| 3 | 100:0 | 126.8 | 6.20 | 68 | (68) |
| 4 | 80:20 | 109.9 | 6.64 | 71 | (76) |
| 5 | 60:40 | 85.4 | 9.14 | 73 | (80) |
| 6 | 40:60 | 66.4 | 10.50 | 78 | (87) |
| 7 | 20:80 | 39.2 | 8.43 | 86 | (95) |
| 8 | 0:100 | 29.4 | 7.62 | 89.8 | (97) |

\* Weight Ratio of PVC to Vinyl Polymer B = 60:40.

Examples 9—14

Blends of Vinyl Polymer B, B—221 PVC resin (Occidental Chemical Corporation) and SMA Polymer II were prepared in various proportions indicated in Table 4 using the above described procedures. The properties of these blends were measured according to previously described procedures in Table 1. The results of these tests are listed in Table 4.

TABLE 4

| Example No. | Composition Vinyl Polymer:SMA Polymer II | Notched Izod Impact Strength at | | Heat Distortion Temperature annealed (18.54 kg/cm²) | |
|---|---|---|---|---|---|
| | | 23.3°C | −28.8°C | 48 H at 50°C | (24 H at 70°C) |
| | | cmkg/cm | | °C | |
| 9 | 100:0 | 126.8 | 6.20 | 68 | (68) |
| 10 | 80:20 | 109.9 | 7.13 | 71 | (76) |
| 11 | 60:40 | 72.4 | 7.51 | 74 | (80) |
| 12 | 40:60 | 58.8 | 8.81 | 81 | (87) |
| 13 | 20:80 | 31.6 | 7.40 | 91 | (98) |
| 14 | 0:100 | 21.8 | 5.98 | 97.5 | (103) |

\* Weight Ratio of PVC to Vinyl Polymer B = 60:40.

Examples 15—20

Blends of Vinyl Polymer B B—221 PVC resin (Occidental Chemical Corporation) and SMA Polymer III were prepared in proportions covering the entire binary composition range using the above described procedures. The notched izod impact strengths and heat distortion temperatures of these blends were measured using the procedures described in Table 1. The results are shown in Table 5.

TABLE 5

| Example No. | Composition Vinyl Polymer*:SMA Polymer III | Notched Izod Impact Strength at | | Heat Distortion Temperature annealed (18.54 kg/cm²) | |
|---|---|---|---|---|---|
| | | 23.3°C | −28.8°C | 48 H at 50°C | (24 H at 70°C) |
| | | cmkg/cm | | °C | |
| 15 | 100:0 | 126.8 | 6.20 | 68 | (68) |
| 16 | 80:20 | 20.1 | 5.06 | 71 | (77) |
| 17 | 60:40 | 18.5 | 5.55 | 74 | (80) |
| 18 | 40:60 | 24.5 | 6.09 | 80 | (86) |
| 19 | 20:80 | 25.6 | 4.63 | 86 | (95) |
| 20 | 0:100 | 25.0 | 4.35 | 89 | (98) |

\* Weight Ratio of PVC to Vinyl Polymer B = 60:40.

Examples 21—25

SMA Polymer I was blended with Vinyl Polymer B in proportions shown in Table 6 in accordance with the above-described procedures. The heat distortion temperatures and the notched izod impact strengths of these blend compositions were tested as described in Table 1. Table 6 shows the results of these measurements.

TABLE 6

| Example No. | Composition SMA Polymer I:Vinyl Polymer B | Notched Izod Impact Strength at | | Heat Distortion Temperature annealed (18.54 kg/cm²) | |
|---|---|---|---|---|---|
| | | 23.3°C | −28.8°C | 48 H at 50°C | (24 H at 70°C) |
| | | cmkg/cm | | °C | |
| 21 | 100:0 | 29.4 | 7.62 | 89.8 | (97) |
| 22 | 90:10 | 29.4 | 7.94 | 85 | (95) |
| 23 | 80:20 | 47.3 | 10.34 | 82 | (95) |
| 24 | 70:30 | 63.1 | 12.51 | 81 | (92) |
| 25 | 60:40 | 72.9 | 14.69 | 79 | (89) |

\* Weight Ratio of PVC to Vinyl Polymer B = 60:40.

Examples 26—30

Blends of Vinyl Polymer B with SMA Polymer III were prepared using the above described procedures. The properties of these compositions were measured using the procedures described in Table 1. The results are shown in Table 7.

TABLE 7

| Example No. | Composition SMA Polymer III:Vinyl Polymer B | Notched Izod Impact Strength at 23.3°C | −28.8°C | Heat Distortion Temperature annealed (18.54 kg/cm²) 48 H at 50°C | (24 H at 70°C) |
|---|---|---|---|---|---|
| | | cmkg/cm | | °C | |
| 26 | 100:0 | 25.0 | 4.35 | 89 | (98) |
| 27 | 90:10 | 20.1 | 6.04 | 87 | (95) |
| 28 | 80:20 | 22.8 | 6.20 | 84 | (96) |
| 29 | 70:30 | 31.0 | 6.64 | 82 | (92) |
| 30 | 60:40 | 28.8 | 8.11 | 79 | (88) |

Examples 31—34

Vinyl Polymer B was blended with SMA Polymer I and B—221 PVC resin (Occidental Chemical Corporation). The proportions are indicated in Table 8. 55-gram samples of each blend were dried and tested by Brabender Torque Rheometer. The results are shown in Table 8.

TABLE 8
Brabender Torque Rheometer Data

| Example No. | 31 | 32 | 33 | 34 |
|---|---|---|---|---|
| Vinyl Polymer*:SMA Polymer I | 80:20 | 60:40 | 40:60 | 20:80 |
| Ram Pressure (grams) | 7500 | 7500 | 7500 | 7500 |
| R.P.M. | 63 | 63 | 63 | 63 |
| Max Fusion Peak (seconds) | 16.2 | 23.2 | 15.8 | 20.8 |
| Max Fusion Torque (meter-grams) | 3800 | 6000 | 6350 | 8000 |
| Equilibrium Torque (meter-grams) | 800 | 1170 | 1200 | 1300 |
| Decomposition (minutes) | 6.4 | 10.3 | 9.3 | 10.2 |
| Stock Held @ °C | 204 | 204 | 204 | 204 |

*Weight Ratio of PVC to Vinyl Polymer B = 60:40

Examples 35—38

Vinyl Polymer B was blended with SMA Polymer I in the proportions indicated in Table 9. 55-gram samples of each blend were dried and tested by Brabender Torque Rheometer. The results of these tests are shown in Table 9.

TABLE 9
Brabender Torque Rheometer Data

| Example No. | 35 | 36 | 37 | 38 |
|---|---|---|---|---|
| SMA Polymer I:Vinyl Polymer B | 90:10 | 80:20 | 70:30 | 60:40 |
| Ram Pressure (grams) | 7500 | 7500 | 7500 | 7500 |
| R.P.M. | 63 | 63 | 63 | 63 |
| Max Fusion Peak (seconds) | 21.0 | 20.8 | 28.2 | 23.8 |
| Max Fusion Torque (meter-grams) | 6250 | 7800 | 6150 | 5400 |
| Equilibrium Torque (meter-grams) | 1350 | 1500 | 1500 | 1500 |
| Decomposition (minutes) | >30 | 21.7 | 24.5 | 23.1 |
| Stock Held @ °C | 204 | 204 | 204 | 204 |

Examples 39—42
Vinyl Polymer B was blended with SMA Polymer III in different proportions shown in Table 10. These blend compositions were dried and 55 gram samples of these materials were tested using a Brabender Torque Rheometer. The results are shown in Table 10.

TABLE 10
Brabender Torque Rheometer Data

| Example No. | 39 | 40 | 41 | 42 |
|---|---|---|---|---|
| SMA Polymer III: Vinyl Polymer B | 90:10 | 80:20 | 70:30 | 60:40 |
| Ram Pressure (grams) | 7500 | 7500 | 7500 | 7500 |
| R.P.M. | 63 | 63 | 63 | 63 |
| Max Fusion Peak (seconds) | 18.2 | 23.2 | 31.2 | 27.4 |
| Max Fusion Torque (meter-grams) | 6220 | 7050 | 6550 | 6100 |
| Equilibrium Torque (meter-grams) | 1150 | 1500 | 1200 | 1200 |
| Decomposition (minutes) | >30 | >30 | >30 | >30 |
| Stock Held @ °C | 204 | 204 | 204 | 204 |

Examples 43—47
SMA Polymer IV was blended with Vinyl Polymer B in various proportions covering the binary composition range. The heat distortion temperatures and notched izod impact strengths of these blend compositions were measured using procedures described in Table 1. The results are shown in Table 11.

TABLE 11

| Example No. | Composition SMA Polymer IV:Vinyl Polymer B | Notched Izod Impact Strength at | | Heat Distortion Temperature annealed (18.54 kg/cm²) 48 H at 50°C (24 H at 70°C) | |
|---|---|---|---|---|---|
| | | 23.3°C | −28.8°C | °C | |
| | | cmkg/cm | | | |
| 43 | 100:0 | 2.67 | 2.01 | 94 | (101) |
| 44 | 90:10 | 3.10 | 1.14 | 92 | (100) |
| 45 | 80:20 | 3.10 | 0.98 | 91 | (99) |
| 46 | 70:30 | 3.64 | 1.36 | 89 | (97) |
| 47 | 60:40 | 4.73 | 1.63 | 86 | (95) |

Examples 48—52

SMA Polymer V was blended with Vinyl Polymer B. The proportions of these components are shown in Table 12. The properties of these blends were measured using methods described in Table 1. The results of these measurements are shown in Table 12.

TABLE 12

| Example No. | Composition SMA Polymer V:Vinyl Polymer B | Notched Izod Impact Strength at | | Heat Distortion Temperature annealed (18.54 kg/cm²) 48 H at 50°C (24 H at 70°C) | |
|---|---|---|---|---|---|
| | | 23.3°C | −28.8°C | °C | |
| | | cmkg/cm | | | |
| 48 | 100:0 | 2.50 | 1.90 | 105 | (108) |
| 49 | 90:10 | 2.07 | 1.31 | 98 | (105) |
| 50 | 80:20 | 2.67 | 1.31 | 96 | (104) |
| 51 | 70:30 | 4.30 | 1.58 | 93 | (101) |
| 52 | 60:40 | 6.20 | 2.72 | 90 | (98) |

Examples 53—58

Blend compositions having B—221 PVC resin (Occidental Chemical Corporation), SMA Polymer IV and Vinyl Polymer B were prepared in various proportions indicated in Table 3. The heat distortion temperatures and notched izod impact strengths of these blends were measured using methods described in Table 1. Table 13 lists the results of these tests.

# 0 137 518

TABLE 13

| Example No. | Composition Vinyl Polymer*:SMA Polymer IV | Notched Izod Impact Strength at | | Heat Distortion Temperature annealed (18.54 kg/cm$^2$) 48 H at 50°C (24 H at 70°C) | |
|---|---|---|---|---|---|
| | | 23.3°C cmkg/cm | −28.8°C | °C | |
| 53 | 100:0 | 126.8 | 6.20 | (68) | 68 |
| 54 | 80:20 | 6.53 | 2.94 | (77) | 71 |
| 55 | 60:40 | 5.44 | 2.50 | (82) | 76 |
| 56 | 40:60 | 4.35 | 2.39 | (94) | 86 |
| 57 | 20:80 | 3.26 | 1.03 | (98) | 90 |
| 58 | 0:100 | 2.67 | 2.01 | (101) | 94 |

*Weight Ratio of PVC to Vinyl Polymer B = 60:40

## Examples 59—62

SMA Polymer V was blended with Vinyl Polymer B and B—221 PVC resin (Occidental Chemical Corporation) in proportions shown in Table 14. 55-gram samples of these blend compositions were tested in Brabender Torque Rheometer. The results of these tests are shown in Table 14.

TABLE 14
Brabender Torque Rheometer Data

| Example No. | 59 | 60 | 61 | 62 |
|---|---|---|---|---|
| Vinyl Polymer*:SMA Polymer V | 80:20 | 60:40 | 40:60 | 20:80 |
| Ram Pressure (grams) | 7500 | 7500 | 7500 | 7500 |
| R.P.M. | 63 | 63 | 63 | 63 |
| Max Fusion Peak (seconds) | 23.0 | 27.0 | 30.8 | 22.0 |
| Max Fusion Torque (meter-grams) | 4110 | 4980 | 5670 | 6870 |
| Equilibrium Torque (meter-grams) | 1050 | 990 | 1050 | 1200 |
| Decomposition (minutes) | 11.9 | 8.7 | 7.1 | 6.9 |
| Stock Held @ °C | 204 | 204 | 204 | 204 |

*Weight Ratio of PVC to Vinyl Polymer B = 60:40

The foregoing examples illustrate that the blends of SMA polymers I, II and III with the polyolefin graft polymers possess high notched impact strengths and high heat distortion temperatures. The blends of the vinyl halide polymer, the polyolefin graft polymer and SMA polymers I, II and III also have good impact strength and enhanced heat distortion temperatures. These blends also have good mechanical properties. Also, the blends of SMA polymers IV and V with the polyolefin graft polymer display high heat distortion temperatures.

The Condensation Polymer Examples
Example 1

Vinyl Polymer B, Polycarbonate Polymer and B—221 injection molding grade PVC resin (Occidental Chemical Corporation) were blended in the ratio indicated in Table 2 using the procedure described above.

27

The properties of this blend composition were tested using the procedures given in Table 1. The results of these tests are given in Table 2.

TABLE 2

| | Vinyl Polymer*:Polycarbonate Polymer (35:65) |
|---|---|
| **Mechanical Properties** | |
| Tensile Strength | 558.89 kg/cm$^2$ |
| Tensile Modulus | 25097.1 kg/cm$^2$ |
| Elongation | 5.04% |
| Notched Izod Impact at 23.3°C | 30.5 cmkg/cm |
| Notched Izod Impact at −28.8°C | 6.69 cmkg/cm |
| Flexural Strength | 98.42 kg/cm$^2$ |
| Flexural Modulus | 26432.8 kg/cm$^2$ |
| Percent Strain | 6.35 |
| Rockwell Hardness | R—114 |
| Shore Durometer Hardness | D—81 |
| Specific Gravity | 1.24 |
| Mold Shrinkage | 0.0052 inch/inch |
| **Thermal Properties** | |
| Heat Distortion Temperature (18.54 kg/cm$^2$) | 98°C |
| Heat Distortion Temperature (annealed) | 102°C |
| UL—94 Rating ⅛″ (0.32 cm) | V—O |
| ¹⁄₁₆″ (0.16 cm) | V—O |
| **Brabender Torque Rheometer Data** | |
| Fusion Time | 36 sec. |
| Maximum Fusion Torque | 5650 meter-grams |
| Equilibrium Torque | 1350 meter-grams |
| Decomposition Time | 5.1 minutes |

*Weight ratio of PVC to Vinyl Polymer B = 60:40

Examples 2—6

Vinyl Polymer B was blended with Polycarbonate Polymer in various proportions as indicated in Table 3 using the above described procedure. These blend compositions were tested for heat distortion temperature and notched izod impact strengths using procedures given in Table 1. The results obtained in these tests are shown in Table 3.

TABLE 3

| Example No. | Composition Polycarbonate Polymer:Vinyl Polymer B | Notched Izod Impact Strength at 23.3°C cmkg/cm | −28.8°C | Heat Distortion Temperature annealed (18.54 kg/cm$^2$) 48 H at 50°C (24 H at 70°C) °C | |
|---|---|---|---|---|---|
| 2 | 100:0 | 96.3 | 26.1 | 127 | (125) |
| 3 | 90:10 | 77.2 | 21.38 | 111 | (115) |
| 4 | 80:20 | 64.2 | 15.2 | 106 | (107) |
| 5 | 70:30 | 46.8 | 11.97 | 100 | (104) |
| 6 | 60:40 | 33.7 | 4.9 | 87 | (95) |

Examples 7—11

The blends of Vinyl Polymer B, Polycarbonate Polymer and B—221 PVC resin (Occidental Chemical Corporation) were prepared using the foregoing procedures. The proportions of various components are given in Table 4. The properties of these blend compositions were measured using the procedures described in Table 1. The results are given in Table 4.

TABLE 4

| Example No. | Composition Vinyl Polymer*:Polycarbonate Polymer | Notched Izod Impact Strength at 23.3°C cmkg/cm | −28.8°C | Heat Distortion Temperature annealed (18.54 kg/cm$^2$) 48 H at 50°C (24 H at 70°C) °C | |
|---|---|---|---|---|---|
| 7 | 100:0 | 126.8 | 6.20 | 68 | (68) |
| 8 | 80:20 | 41.9 | 3.86 | 71 | (76) |
| 9 | 60:40 | 16.9 | 5.44 | 74 | (82) |
| 10 | 40:60 | 25.0 | 8.32 | 90 | (97) |
| 11 | 20:80 | 78.3 | 10.88 | 106 | (108) |

*Weight ratio of PVC to Vinyl Polymer B = 60:40

Examples 12—15

Polycarbonate Polymer was blended with B—221 PVC resin (Occidental Chemical Corporation) and Vinyl Polymer B. The proportions of various components used in these blends are indicated in Table 5. 55-gram samples of each blend were dried and tested by Brabender Torque Rheometer. The results are shown in Table 5.

TABLE 5
Brabender Torque Rheometer Data

| Example No. | 12 | 13 | 14 | 15 |
|---|---|---|---|---|
| Polycarbonate Polymer:Vinyl Polymer* | 20:80 | 40:60 | 60:40 | 80:20 |
| Ram Pressure (grams) | 7500 | 7500 | 7500 | 7500 |
| R.P.M. | 63 | 63 | 63 | 63 |
| Max Fusion Peak (seconds) | 2.14 | 25.8 | 29.2 | 83.8 |
| Max Fusion Torque (meter-grams) | 4500 | 5300 | 5400 | 5250 |
| Equilibrium Torque (meter-grams) | 900 | 1050 | 1400 | 2100 |
| Decomposition Time (minutes) | 12.2 | 10.3 | 6.3 | 4.4 |
| Stock Held @ °C | 204 | 204 | 204 | 204 |

*Weight Ratio of PVC to Vinyl Polymer B = 60:40

Examples 16—19
Polycarbonate Polymer was blended with Vinyl Polymer B in different proportions as indicated in Table 5. A 55-gram sample of each blend was dried and tested using a Brabender Torque Rheometer. The results of these tests are given in Table 6.

TABLE 6
Brabender Torque Rheometer Data

| Example No. | 16 | 17 | 18 | 19 |
|---|---|---|---|---|
| Polycarbonate Polymer:Vinyl Polymer B | 20:80 | 40:60 | 60:40 | 80:20 |
| Ram Pressure (grams) | 7500 | 7500 | 7500 | 7500 |
| R.P.M. | 63 | 63 | 63 | 63 |
| Max Fusion Peak (seconds) | 66.0 | 53 | 58.4 | 39.6 |
| Max Fusion Torque (meter-grams) | 7100 | 4850 | 4650 | 4200 |
| Equilibrium Torque (meter-grams) | 2400 | 2000 | 1850 | 1650 |
| Decomposition Time (minutes) | 5.1 | 4.8 | 6.1 | 7.2 |
| Stock Held @ °C | 204 | 204 | 204 | 204 |

Examples 20—23
Polyarylate Polymer was blended with Vinyl Polymer B and B—221 PVC resin in different proportions shown in Table 7. The blends were prepared according to previously described procedures. The properties of these blends were measured using procedures described in Table 1. The results are shown in Table 7.

TABLE 7

| Example No. | Composition Vinyl Polymer*:Polyarylate Polymer | Notched Izod Impact Strength at 23.3°C | −28.8°C cmkg/cm | Heat Distortion Temperature annealed (18.54 kg/cm²) 48 H at 50°C (24 H at 70°C) °C | |
|---|---|---|---|---|---|
| 20 | 80:20 | 7.1 | 2.2 | 70 | (72) |
| 21 | 60:40 | 4.9 | 1.90 | 73 | (78) |
| 22 | 40:60 | 4.4 | 6.91 | 87 | (89) |
| 23 | Polyarylate Polymer:Vinyl Polymer B 60:40 | 20.7 | 2.23 | 98 | (102) |

*Weight ratio of PVC to Vinyl Polymer B = 60:40

Examples 24—26

The blends of Polyarylate Polymer were prepared with B—221 PVC resin and Vinyl Polymer B. 55-gram samples of these blends were dried and tested using a Brabender Torque Rheometer. The results of these tests are given in Table 8.

TABLE 8
Brabender Torque Rheometer Data

| Example No. | 24 | 25 | 26 |
|---|---|---|---|
| Polyarylate Polymer:Vinyl Polymer* | 20:80 | 40:60 | 60:40 |
| Ram Pressure (grams) | 7500 | 7500 | 7500 |
| R.P.M. | 63 | 63 | 63 |
| Max Fusion Peak (seconds) | 18.8 | 25.0 | 10.0 |
| Max Fusion Torque (meter-grams) | 4040 | 3510 | 3200 |
| Equilibrium Torque (meter-grams) | 930 | 1200 | 1560 |
| Decomposition Time (minutes) | 11.2 | 8.4 | 6.7 |
| Stock Held @ °C | 204 | 204 | 204 |

*Weight Ratio of PVC to Vinyl Polymer B = 60:40

Example 27

Vinyl Polymer B was blended with Polyarylate Polymer in a proportion of 60:40 (by weight). A 55-gram sample of this blend composition was dried and tested using a Brabender Torque Rheometer. The results of this test are shown in Table 9.

31

# 0 137 518

## TABLE 9
### Brabender Torque Rheometer Data

| | |
|---|---|
| Example No. | 27 |
| Polyarylate Polymer:Vinyl Polymer B | 60:40 |
| Ram Pressure (grams) | 7500 |
| R.P.M. | 63 |
| Max Fusion Peak (seconds) | 63.0 |
| Max Fusion Torque (meter-grams) | 4610 |
| Equilibrium Torque (meter-grams) | 1990 |
| Decomposition Time (minutes) | 5.5 |
| Stock Held @ °C | 204 |

## Examples 28—30

Polybutylene Terephthalate Polymer was blended with Vinyl Polymer B and B—221 PVC resin (Occidental Chemical Corporation) using the above described procedures. The proportions of these components are shown in Table 10. These blend compositions were tested for notched izod impact strength and the heat distortion temperature using procedures described in Table 1. The properties of these blends are shown in Table 10.

## TABLE 10

| Example No. | Composition Vinyl Polymer*:Polybutylene Terephthalate | Notched Izod Impact Strength at 23.3°C cmkg/cm | −28.8°C | Heat Distortion Temperature annealed (18.54 kg/cm²) 48 H at 50°C (24 H at 70°C) °C | |
|---|---|---|---|---|---|
| 28 | 80:20 | 9.2 | 2.23 | 67 | (63) |
| 29 | 60:40 | 8.11 | 2.88 | 60 | (61) |
| 30 | 0:100 | 7.6 | 4.30 | 55 | (57) |

## Examples 31—32

The Polybutylene Terephthalate Polymer was blended with B—221 PVC resin (Occidental Chemical Corporation) and Vinyl Polymer B using the above described procedure. 55-gram samples of these blends were tested in a Brabender Torque Rheometer. The results of these tests are shown in Table 11.

32

# 0 137 518

TABLE 11
Brabender Torque Rheometer Data

| Example No. | 31 | 32 |
|---|---|---|
| Polybutylene Terephthalate Polymer:Vinyl Polymer* | 20:80 | 40:60 |
| Ram Pressure (grams) | 7500 | 7500 |
| R.P.M. | 63 | 63 |
| Max Fusion Peak (seconds) | 30.0 | 23.0 |
| Max Fusion Torque (meter-grams) | 3360 | 2960 |
| Equilibrium Torque (meter-grams) | 840 | 990 |
| Decomposition Time (minutes) | 11.7 | 5.6 |
| Stock Held @ °C | 204 | 204 |

*Weight Ratio of PVC to Vinyl Polymer B = 60:40

The foregoing examples illustrate that blends with high impact strengths can be prepared by blending the polyolefin graft polymer with various polycondensation polymers. These blends also possess significantly higher heat distortion temperature and dimensional stability as compared to the heat distortion temperature and dimensional stability of the polyolefin graft polymer. In addition, these blend compositions display excellent notched impact strengths at sub-ambient temperatures. These blends have good flame retardance properties and can be processed at temperatures considerably lower than those necessary for processing the polycondensation polymers.

More specifically, the examples illustrate that the blends of the polycarbonate polymer with polyolefin graft polymer possess excellent impact strengths and high heat distortion temperatures. The blends of the vinyl halide polymer, polycarbonate polymer and the polyolefin graft polymer also display high impact strengths and enhanced heat distortion temperatures. These blends also have improved processability. The blends of the polyolefin graft polymers with the polyarylate polymer and the polybutylene terephthalate polymer display high distortion temperatures along with good notched impact strengths.

## Claims

1. A polymer composition which comprises an ASA polymer, a SMA polymer or a condensation polymer and a polyolefin graft polymer, wherein the polyolefin graft polymer is a vinyl halide polyolefin graft polymer, comprising a polymer of an olefin of 2 to 8 carbon atoms and a vinyl halide monomer, and the vinyl halide monomer is alone or in combination with up to 50 percent by weight based on the total weight of monomer of an ethylenically unsaturated compound copolymerizable therewith, and the polyolefin is substantially insoluble in the monomer but is capable of absorbing the monomer.

2. The polymer composition of claim 1 wherein the vinyl halide is vinyl chloride.

3. The polymer composition of Claims 1 or 2, wherein the polyolefin comprises a mixture of an ethylene, propylene diene modified polymer and a high-density polyethylene.

4. The polymer composition of one of Claims 1 to 3 wherein the polyolefin is present in a proportion of 30—50 per cent by weight.

5. The polymer composition of any of Claims 1 to 4 wherein the vinyl chloride graft polymer is present in a proportion of 40 to 60 weight percent based on the weight of the polymer components.

6. The polymer composition of any of claims 1 to 5 wherein the ASA-polymer, the SMA polymer or the condensation polymer is present in a proportion of 20 to 80 weight percent based on the weight of total polymer components and the vinyl halide polyolefin graft polymer is present in a ratio of 10 parts polyolefin graft polymer to 90 parts vinyl halide to 90 parts polyolefin graft polymer to 10 parts vinyl halide.

7. A polymer composition of any of claims 1 to 6 comprising a polymer of a vinyl aromatic compound, an unsaturated nitrile, and a base polymer selected from the group consisting of chlorinated polyethylene, an acrylic polymer, and an ethylene, propylene polyene modified polymer, and a vinyl halide polyolefin graft polymer wherein the vinyl halide is alone or in combination with up to 50 percent by weight based on the total weight of monomer of an ethylenically unsaturated compound copolymerizable therewith the polyolefin comprises a polymer of an aliphatic hydrocarbon olefin of 2 to 8 carbon atoms, and the polyolefin is substantially insoluble in the monomer but is capable of absorbing the monomer.

8. A polymer composition of any of claims 1 to 7 comprising a polymer of styrene, acrylonitrile and chlorinated polyethylene, and a vinyl chloride polyolefin graft polymer, wherein the polyolefin comprises an ethylene, propylene diene modified polymer that is substantially insoluble in vinyl chloride but is capable of absorbing vinyl chloride.

9. The polymer composition of Claim 8, which also comprises polyvinyl chloride.

10. A polymer composition of any of claims 1 to 7 comprising a polymer of styrene, acrylonitrile and an acrylic polymer and a vinyl chloride polyolefin graft polymer, wherein the polyolefin comprises an ethylene, propylene diene modified polymer that is substantially insoluble in vinyl chloride that is capable of absorbing vinyl chloride.

11. The polymer composition of Claim 10 wherein the acrylic polymer comprises a graft polymer of 10 to 40 percent of (A) a polymer of (1) 60 to 99.9 percent by weight of at least one alkyl acrylate, (2) 0 to 20 percent by weight of at least one vinyl or vinylidene compound polymerizable with (1), and (3) 0.1 to 20 percent by weight of at least on polyalkyl compound copolymerizable with component (1), and (B) 90 to 60 percent by weight of a monomer mixture comprising 30 to 100 percent by weight of an aromatic vinyl monomer and 0 to 70 percent by weight of acrylonitrile and methyl methacrylate in which the proportion of acrylonitrile is 20 to 100 percent by weight with the remainder being methyl methacrylate.

12. A polymer composition of any of claims 1 to 7 comprising a polymer of stryene, acrylonitrile and an ethylene, propylene polyene modified polymer, and a vinyl chloride polyolefin graft polymer, wherein the polyolefin comprises an ethylene, propylene diene modified polymer that is substantially insoluble in vinyl chloride but is capable of absorbing vinyl chloride.

13. A polymer composition of any of claims 1 to 6 comprising: a copolymer of a monovinyl aromatic compound and an anhydride of an ethylenically unsaturated dicarboxylic acid and a vinyl halide polyolefin graft polymer wherein the vinyl halide is alone or in combination with up to 50 percent by weight based on the total weight of monomer of an ethylenically unsaturated compound copolymerizable therewith, the polyolefine comprises a polymer of an aliphatic hydrocarbon olefin of 2 to 8 carbon atoms and the polyolefin is substantially insoluble in the monomer but is capable of absorbing the monomer.

14. A polymer composition comprising: a copolymer of styrene and maleic anhydride and a vinyl chloride polyolefin graft polymer, wherein the polyolefin comprises an ethylene propylene diene modified polymer that is substantially insoluble in vinyl chloride but is capable of absorbing vinyl chloride.

15. The polymer composition of Claim 14, wherein the copolymer comprises 50 to 95 mole percent of styrene and 5 to 50 mole percent of said anhydride.

16. The polymer composition of Claim 15, wherein the copolymer is modified with 5 to 40 weight percent of rubber based on the weight of copolymer and rubber.

17. The polymer composition of Claim 16, wherein the rubber is selected from the group consisting of homopolymers of conjugated dienes, copolymers of said dienes with up to 50 weight percent of one or more mono-olefinically unsaturated monomers, ethylene propylene diene terpolymer rubbers, acrylate diene copolymer rubbers and mixtures thereof.

18. The polymer composition of Claim 14, wherein the copolymer comprises 50 to 95 weight percent of styrene, 5 to 30 weight percent of said anhydride and 0 to 20 weight percent of a copolymerizable monomer.

19. The polymer composition of Claim 18, wherein the copolymer is modified with 5 to 25 percent by weight of a rubber having a glass transition temperature below 0°C, based on the weight of copolymer and rubber.

20. The polymer composition of Claim 19, wherein the copolymer has blended therewith a composition comprising a graft copolymer of from 20 to 40 percent by weight of a monomer selected from the group comprising methylmethacrylate and acrylonitrile and 80 to 60 percent by weight of a vinyl aromatic monomer said copolymer being grafted from 10 to 60 percent based on the weight of the composition of a substrate rubber having a glass transition temperature below 0°C.

21. A polymer composition of any of claims 1 to 6 comprising a thermoplastic condensation polymer and a vinyl halide polyolefin graft polymer, wherein the vinyl halide is alone or in combination with up to 50 percent by weight based on the total weight of monomer of an ethylenically unsaturated compound copolymerizable therewith, the polyolefin comprises a polymer of an aliphatic hydrocarbon olefin of 2 to 8 carbon atoms and the polyolefin is substantially insoluble in the monomer but is capable of absorbing the monomer.

22. The polymer composition of Claim 21, wherein the condensation polymer is a polycarbonate, a polyester of bisphenol and a polycarboxylic acid and/or a polyalkylene terephthalate.

23. A polymer composition of any of claims 1 to 6 comprising a polycarbonate and a vinylchloride polyolefin graft polymer, wherein the polyolefin comprises an ethylene, propylene diene modified polymer that is substantially insoluble in vinylchloride but is capable of absorbing vinylchloride.

24. A polymer composition of any of claims 1 to 6 comprising a polyester of bisphenol A and a mixture of isophthalic acid and terephthalic acid and a vinyl polyolefin graft polymer, wherein the polyolefin comprises an ethylene, propylene diene modified polymer that is substantially insoluble in vinylchloride but is capable of absorbing vinylchloride.

25. A polymer composition of any of claims 1 to 6 comprising polybutylene terephthalate and a vinylchloride polyolefin graft polymer, wherein the polyolefin comprises an ethylene, propylene diene

34

**0 137 518**

modified polymer that is substantially insoluble in vinylchloride but is capable of absorbing vinylchloride.

**Revendications**

1. Composition polymère qui comprend un polymère ASA, un polymère SMA ou un polymère de condensation, et un polymère greffé de polyoléfine, dans laquelle le polymère greffé de polyoléfine est un polymère greffé de polyoléfine et d'halogénure de vinyle comprenant un polymère d'une oléfine de 2 à 8 atomes de carbone et un monomère d'halogénure de vinyle, le monomère d'halogénure de vinyle est seul ou en combinaison avec jusqu'à 50% en poids, sur la base du poids total de monomère, d'un composé éthyléniquement insaturé copolymérisable avec lui, et la polyoléfine est pratiquement insoluble dans le monomère mais est capable d'absorber le monomère.

2. Composition polymère selon la revendication 1, dans laquelle l'halogénure de vinyle est le chlorure de vinyle.

3. Composition polymère les revendications 1 ou 2, dans laquelle la polyoléfine comprend un mélange d'un polymère modifié d'éthylène, de propylène et d'un diène, et d'un polyéthylène de haute densité.

4. Composition polymère selon l'une des revendications 1 à 3, dans laquelle la polyoléfine est présente en une proportion de 30 à 50% en poids.

5. Composition polymère selon l'une des revendications 1 à 4, dans laquelle le polymère greffé de chlorure de vinyle est présent en une proportion de 40 à 60% en poids sur la base du poids des constituants polymères.

6. Composition polymère selon l'une des revendications 1 à 5, dans laquelle le polymère ASA, le polymère SMA ou le polymère de condensation est présent en une proportion de 20 à 80% en poids, sur la base du poids de l'ensemble des constituants polymères, et le polymère greffé de polyoléfine et d'halogénure de vinyle est présent dans un rapport qui varie de 10 parties de polymère greffé de polyoléfine pour 90 parties d'halogénure de vinyle, à 90 parties de polymère greffé de polyoléfine pour 10 parties d'halogénure de vinyle.

7. Composition polymère selon l'une des revendications 1 à 6, comprenant un polymère d'un composé vinylaromatique, d'un nitrile insaturé, et d'un polymère de base choisi dans le groupe constitué par un polyéthylène chloré, un polymère acrylique, et un polymère modifié d'éthylène, de propylène et d'un polyène, et un polymère greffé de polyoléfine et d'halogénure de vinyle, dans laquelle l'halogénure de vinyle est seul ou en combinaison avec jusqu'à 50% en poids, sur la base du poids total de monomère, d'un composé éthyléniquement insaturé copolymérisable avec lui, la polyoléfine comprend un polymère d'une oléfine hydrocarbonée aliphatique de 2 à 8 atomes de carbone, et la polyoléfine est pratiquement insoluble dans le monomère, mais est capable d'absorber le monomère.

8. Composition polymère selon l'une des revendications 1 à 7 comprenant un polymère de styrène, d'acrylonitrile et de polyéthylène chloré, et un polymère greffé de polyoléfine et de chlorure de vinyle, dans laquelle la polyoléfine comprend un polymère modifié d'éthylène, de propylène et d'un diène, qui est pratiquement insoluble dans le chlorure de vinyle mais qui est capable d'absorber le chlorure de vinyle.

9. Composition polymère selon la revendication 8, qui comprend aussi du chlorure de polyvinyle.

10. Composition polymère selon l'une des revendications 1 à 7, comprenant un polymère de styrène, d'acrylonitrile et d'un polymère acrylique et un polymère greffé de polyoléfine et de chlorure de vinyle, dans laquelle la polyoléfine comprend un polymère modifié d'éthylène, de propylène et d'un diène qui est pratiquement insoluble dans le chlorure de vinyle mais qui est capable d'absorber le chlorure de vinyle.

11. Composition polymère selon la revendication 10, dans laquelle le polymère acrylique comprend un polymère greffé de 10 à 40% de (A) un polymère de (1) 60 à 99,9% en poids d'au moins un acrylate d'alkyle, (2) 0 à 20% en poids d'au moins un composé de vinyle ou de vinylidène polymérisable avec (1) et (3) 0,1 à 20% en poids d'au moins un composé de polyalkyle copolymérisable avec le constituant (1), et de (B) 90 à 60% en poids d'un mélange de monomères comprenant de 30 à 100% en poids d'un monomère vinylaromatique et de 0 à 70% en poids d'acrylonitrile et de méthacrylate de méthyle, dans lequel la proportion d'acrylonitrile est de 20 à 100% en poids, le reste étant du méthacrylate de méthyle.

12. Composition polymère selon l'une des revendications 1 à 7 comprenant un polymère de styrène, d'acrylonitrile et d'un polymère modifié d'éthylène, de propylène et d'un polyène, et un polymère greffé de polyoléfine et de chlorure de vinyle, dans laquelle la polyoléfine comprend un polymère modifié d'éthylène, de propylène et d'un diène, qui est pratiquement insoluble dans le chlorure de vinyle mais qui est capable d'absorber le chlorure de vinyle.

13. Composition polymère selon l'une des revendications 1 à 6 comprenant: un copolymère d'un composé monovinylaromatique et d'un anhydride d'un acide dicarboxylique éthyléniquement insaturé, et un polymère greffé de polyoléfine et d'halogénure de vinyle, dans laquelle l'halogénure de vinyle est seul ou en combinaison avec jusqu'à 50% en poids, sur la base du poids total de monomère, d'un composé éthyléniquement insaturé copolymérisable avec lui, la polyoléfine comprend un polymère d'une oléfine hydrocarbonée aliphatique de 2 à 8 atomes de carbone et la polyoléfine est pratiquement insoluble dans le monomère mais est capable d'absorber le monomère.

14. Composition polymère comprenant: un copolymère de styrène et d'anhydride maleique et un polymère greffé de polyoléfine et de chlorure de vinyle, dans laquelle la polyoléfine comprend un polymère modifié d'éthylène, de propylène et d'un diène, qui est pratiquement insoluble dans le chlorure de vinyle

35

mais qui est capable d'absorber le chlorure de vinyle.

15. Composition polymère selon la revendication 14, dans laquelle le copolymère comprend de 50 à 95% en moles de styrène et de 5 à 50% en moles dudit anhydride.

16. Composition polymère selon la revendication 15, dans laquelle le copolymère est modifié par de 5 à 40% en poids de caoutchouc, sur la base du poids du copolymère et du caoutchouc.

17. Composition polymère selon la revendication 16, dans laquelle le caoutchouc est choisi dans le groupe formé par les homopolymères de diènes conjugués, les copolymères desdits diènes avec jusqu'à 50% en poids d'un ou de plusieurs monomères oléfiniquement mono-insaturés, les caoutchoucs terpolymères éthylène-propylène-diène, les caoutchoucs copolymères acrylate-diène et leurs mélanges.

18. Composition polymère selon la revendication 14, dans laquelle le copolymère comprend de 50 à 95% en poids de styrène, de 5 à 30% en poids dudit anhydride et de 0 à 20% en poids d'un monomère copolymérisable.

19. Composition polymère selon la revendication 18, dans laquelle le copolymère est modifié par de 5 à 25% en poids d'un caoutchouc ayant une température de transition vitreuse inférieure à 0°C, sur la base du poids du copolymère et du caoutchouc.

20. Composition copolymère selon la revendication 19, dans laquelle le copolymère est en mélange avec une composition comprenant un copolymère greffé de 20 à 40% en poids d'un monomère choisi dans le groupe comprenant le méthacrylate de méthyle et l'acrylonitrile et de 80 à 60% en poids d'un monomère vinylaromatique, ledit copolymère étant greffé par de 10 à 60%, sur la base du poids de la composition, d'un caoutchouc de substrat ayant une température de transition vitreuse inférieure à 0°C.

21. Composition polymère selon l'lune des revendications 1 à 6, comprenant un polymère de condensation thermoplastique et un polymère greffé de polyoléfine et d'halogénure de vinyle, dans laquelle l'halogénure de vinyle est seul ou en combinaison avec jusqu'à 50% en poids, sur la base du poids total monomère, d'un composé éthyléniquement insaturé copolymérisable avec lui polyoléfine comprend un polymère d'une oléfine hydrocarbonée aliphatique à 8 atomes de carbone et la polyoléfine est pratiquement insoluble dans monomère mais est capable d'absorber le monomère.

22. Composition polymère selon la revendication 21 dans laquelle le polymère de condensation est un polycarbonate, un polyester bisphénol et d'un acide polycarboxylique et/ou un téréphtalate polyalkylène.

23. Composition polymère selon l'une des revendications 1 à 6 comprenant un polycarbonate et un polymère greffé de polyoléfine et chlorure de vinyle, dans laquelle la polyoléfine comprend un polymère modifié d'éthylène, de propylène et d'un diène, qui est pratiquement insoluble dans chlorure de vinyle mais qui est capable d'absorber le chlorure de vinyle.

24. Composition polymère selon l'une des revendication 1 à 6 comprenant un polyester de bisphénol A et d'un mélange d'acide isophtalique d'acide téréphtalique, et un polymère greffé de polyoléfine et de chlorure vinyle dans laquelle la polyoléfine comprend un polymère modifié d'éthylène propylène et d'un diène, qui est pratiquement insoluble dans le chlorure vinyle mais qui est capable d'absorber de chlorure de vinyle.

25. Composition polymère selon l'une des revendications 1 à 6 comprenant du téréphtalate de polybutylène et un polymère greffé polyoléfine et de chlorure de vinyle, dans laquelle la polyoléfine comprend polymère modifié d'éthylène, de propylène et d'un diène, qui est pratiquement insoluble dans le chlorure de vinyle mais qui est capable d'absorber le chlorure de vinyle.

**Patentansprüche**

1. Polymerzusammensetzung, umfassend ein ASA-Polymer, ein SMA-Polymer oder ein Kondensationspolymer und ein Polyolefinpfropfpolymer, worin das Polyolefinpfropfpolymer ein Vinylhalogenidpolyolefinpfropfpolymer ist, umfassend ein Polymer eines Olefins mit 2 bis 8 Kohlenstoffatomen und eines Vinylhalogenidmonomers, wobei das Vinylhalogenidmonomer allein oder in Kombination mit bis zu 50 Gew.-%, bezogen auf das Gesamtgewicht an Monomer einer ethylenisch ungesättigten Verbindung, die damit copolymerisierbar ist, ist und das Polyolefin im wesentlichen unlöslich in dem Monomer ist, aber fähig ist, das Monomer zu absorbieren.

2. Polymerzusammensetzung nach Anspruch 1, worin das Vinylhalogenid Vinylchlorid ist.

3. Polymerzusammensetzung nach Anspruch 1 oder 2, worin das Polyolefin eine Mischung eines Ethylen-Propylen-Dien modifizierten Polymers und eines Polyethylens hoher Dichte umfaßt.

4. Polymerzusammensetzung nach einem der Ansprüche 1 bis 3, worin das Polyolefin in einem Anteil von 30 bis 50 Gew.-% vorhanden ist.

5. Polymerzusammensetzung nach einem der Ansprüche 1 bis 4, worin das Vinylchloridpfropfpolymer in einem Anteil von 40 bis 60 Gew.-%, bezogen auf das Gewicht der Polymerkomponenten, vorhanden ist.

6. Polymerzusammensetzung nach einem der Ansprüche 1 bis 5, worin das ASA-Polymer, das SMA-Polymer oder das Kondensationspolymer in einem Anteil von 20 bis 80 Gew.-%, bezogen auf das Gewicht der gesamten Polymerkomponenten, vorhanden ist und das Vinylhalogenidpolyolefinpfropfpolymer in einem Verhältnis von 10 Teilen Polyolefinpfropfpolymer zu 90 Teilen Vinylhalogenid bis 90 Teilen Polyolefinpfropfpolymer zu 10 Teilen Vinylhalogenid vorhanden ist.

7. Polymerzusammensetzung nach einem der Ansprüche 1 bis 6, umfassend ein Polymer einer vinylaromatischen Verbindung, eines ungesättigten Nitrils und eines Basispolymers, ausgewählt aus der

**0 137 518**

Gruppe, bestehend aus chloriertem Polyethylen, einem Acrylsäurepolymer, einem Ethylen-Propylen-Polyen modifizierten Polymer und einem Vinylhalogenidpolyolefinpfropfpolymer, worin das Vinylhalogenid allein oder in Kombination mit bis zu 50 Gew.-%, bezogen auf das Gesamtgewicht an Monomer, einer ethylenisch ungesättigten Verbindung, die damit copolymerisierbar ist, ist, wobei das Polyolefin ein Polymer eines aliphatischen Kohlenwasserstoffs mit 2 bis 8 Kohlenstoffatomen umfaßt und das Polyolefin im wesentlichen unlöslich in dem Monomer ist, aber fähig ist, das Monomer zu absorbieren.

8. Polymerzusammensetzung nach einem der Ansprüche 1 bis 7, umfassend ein Polymer von Styrol, Acrylnitril und chloriertem Polyethylen und einem Vinylchloripolyolefinpforpfpolymer, worin das Polyolefin ein Ethylen-Propylen-Dien-modifiziertes Polymer umfaßt, das im wesentlichen unlöslich in Vinylchlorid ist, aber fähig ist, Vinylchlorid zu absorbieren.

9. Polymerzusammensetzung nach Anspruch 8, die auch Polyvinylchlorid umfaßt.

10. Polymerzusammensetzung nach einem der Ansprüche 1 bis 7, umfassend ein Polymer von Styrol, Acrylnitril und einem Acrylsäurepolymer und einem Vinylchloridpolyolefinpfropfpolymer, worin das Polyolefin ein Ethylen-Propylen-Dien-modifiziertes Polymer umfaßt, das im wesentlichen unlöslich in Vinylchlorid ist, das fähig ist, Vinylchlorid zu absorbieren.

11. Polymerzusammensetzung nach Anspruch 10, worin das Acrylsäurepolymer ein Pfropfpolymer umfaßt von 10 bis 40% (A) eines Polymers von (1), 60 bis 99,9 Gew.-% mindestens eines Alkylacrylats, (2) 0 bis 20 Gew.-% mindestens einer Vinyl- oder Vinylidenverbindung, die mit (1) polymerisierbar ist, und (3) 0,1 bis 20 Gew.-% mindestens einer Polyalkylverbindung, die mit der Komponente (1) copolymerisierbar ist und (B) 90 bis 60 Gew.-% einer monomeren Mischung, umfassend 30 bis 100 Gew.-% eines aromatischen Vinylmonomers und 0 bis 70 Gew.-% Acrylnitril und Methylmethacrylat, wobei der Anteil des Acrylnitrils 20 bis 100 Gew.-% beträgt, wobei der Rest Methylmethacrylat ist.

12. Polymerzusammensetzung nach einem der Ansprüche 1 bis 7, umfassend ein Polymer von Styrol, Acrylnitril und einem Ethylen, Propylenpolyen-modifizierten Polymer und einem Vinylchloridpolyolefin-Pfropfpolymer, worin das Polyolefin ein Ethylen-Propyl-Dien-modifiziertes Polymer umfaßt, das im wesentlichen unlöslich in Vinylchlorid ist, aber fähig ist, Vinylchlorid zu absorbieren.

13. Polymerzusammensetzung nach einem der Ansprüche 1 bis 6, umfassend: ein Copolymer einer monovinylaromatischen Verbindung und ein Anhydrid einer ethylenisch ungesättigten Dicarbonsäure und ein Vinylhalogenidpolyolefinpfropfpolymer, worin das Vinylhalogenid allein oder in Kombination mit bis zu 50 Gew.-%, bezogen auf das Gesamtgewicht an Monomer, einer ethylenisch ungesättigten Verbindung, die damit polymerisierbar ist, ist, und wobei das Polyolefin ein Polymer eines aliphatischen Kohlenwasserstoffolefins mit 2 bis 8 Kohlenstoffatomen umfaßt und das Polyolefin im wesentlichen unlöslich in dem Monomer ist, aber fähig ist, das Monomer zu absorbieren.

14. Polymerzusammensetzung, umfassend: ein Copolymer von Styrol und Maleinsäureanhydrid und ein Vinylchloridpolyolefinpfropfpolymer, worin das Polyolefin ein Ethylen-Propylen-Dien-modifiziertes Polymer umfaßt, das im wesentlichen unlöslich in Vinylchlorid ist, aber fähig ist, Vinylchlorid zu absorbieren.

15. Polymerzusammensetzung nach Anspruch 14, worin das Copolymer 50 bis 95 Mol-% Styrol und 5 bis 50 Mol-% des Anhydrids umfaßt.

16. Polymerzusammensetzung nach Anspruch 15, worin das Copolymer mit 5 bis 40 Gew.-% Kautschuk, bezogen auf das Gewicht von Copolymer und Kautschuk, modifiziert ist.

17. Polymerzusammensetzung nach Anspruch 16, worin der Kautschuk ausgewählt ist aus der Gruppe, bestehend aus Homopolymeren von konjugierten Dienen, Copolymeren dieser Diene mit bis zu 50 Gew.-% eines oder mehrerer monoolefinisch ungesättigten Monomeren, Ethylenpropylendienterpolymerkautschuke, Acrylatdiencopolymerkautschuke und Mischungen davon.

18. Polymerzusammensetzung nach Anspruch 14, worin das Copolymer 50 bis 95 Gew.-% Styrol, 5 bis 30 Gew.-% des Anhydrids und 0 bis 20 Gew.-% eines copolymerisierbaren Monomers umfaßt.

19. Polymerzusammensetzung nach Anspruch 18, worin das Copolymer mit 5 bis 25 Gew.-% eines Kautschuks mit einer Glasübergangstemperatur unter 0°C, bezogen auf das Gewicht von Copolymer und Kautschuk, modifiziert ist.

20. Polymerzusammensetzung nach Anspruch 19, worin das Copolymer mit einer Zusammensetzung gemischt wurde, die ein Pfropfcopolymer aus 20 bis 40 Gew.-% eines Monomeren, ausgewählt aus der Gruppe, bestehend aus Methylmethacrylat und Acrylnitril und 80 bis 60 Gew.-% eines vinylaromatischen Monomers umfaßt, wobei das Copolymer mit 10 bis 60 Gew.-%, bezogen auf das Gewicht der Zusammensetzung eines Kautschuksubstrates mit einer Glasübergangstemperatur unter 0°C gepfropft wurde.

21. Polymerzusammensetzung nach eimen der Ansprüche 1 bis 6, umfassend ein thermoplastisches Kondensationspolymer und ein Vinylhalogenidpolyolefinpfropfpolymer, worin das Vinylhalogenid allein ist oder in Kombination mit bis zu 50 Gew.-%, bezogen auf das Gesamtgewicht an Monomer einer ethylenisch ungesättigten Verbindung, die damit copolymerisierbar ist, wobei das Polyolefin ein Polymer aliphatischen Kohlenwasserstoffs mit 2 bis 8 Kohlenstoffatomen umfaßt und das Polyolefin im wesentlichen unlöslich in dem Monomer ist, aber fähig ist, das Monomer zu absorbieren.

22. Polymerzusammensetzung nach Anspruch 21, worin das Kondensationspolymer ein Polycarbonat, ein Polyester von Bisphenol und einer Polycarbonsäure und/oder ein Polyalkylenterephthalat ist.

23. Polymerzusammensetzung nach einem der Ansprüche 1 bis 6, umfassend ein Polycarbonat und ein

37

Vinylchloridpolyolefinpfropfpolymer, worin das Polyolefin ein Ethylen-Propylen-Dien-modifiziertes Polymer umfaßt, das im wesentlichen unlöslich in Vinylchlorid ist, aber fähig ist, Vinylchlorid zu absorbieren.

24. Polymerzusammensetzung nach einem der Ansprüche 1 bis 6, umfassend einen Polyester von Bisphenol A und einer Mischung von Isophthalsäure und Terephthalsäure und einem Vinylpolyolefinpfropfpolymer, worin das Polyolefin ein Ethylen-Propylen-Dien-modifiziertes Polymer umfaßt, das im wesentlichen unlöslich in Vinylchlorid ist, aber fähig ist, Vinylchlorid zu absorbieren.

25. Polymerzusammensetzung nach einem der Ansprüche 1 bis 6, umfassend Polybutylenterephthalat und ein Vinylchloridpolyolefinpfropfpolymer, worin das Polyolefin ein Ethylen-Propylen-Dien-modifiziertes Polymer umfaßt, das im wesentlichen unlöslich in Vinylchlorid ist, aber fähig ist, Vinylchlorid zu absorbieren.